(19) Europäisches Patentamt / European Patent Office / Office européen des brevets

(11) **EP 4 300 941 A1**

(12) **EUROPEAN PATENT APPLICATION**
published in accordance with Art. 153(4) EPC

(43) Date of publication:
**03.01.2024 Bulletin 2024/01**

(21) Application number: **22787442.7**

(22) Date of filing: **08.04.2022**

(51) International Patent Classification (IPC):
**H04N 5/232** *(2006.01)*    **H04N 5/225** *(2006.01)*

(52) Cooperative Patent Classification (CPC):
**H04N 23/45; H04N 23/00; H04N 23/60;**
**H04N 23/6811**

(86) International application number:
**PCT/CN2022/085763**

(87) International publication number:
**WO 2022/218216 (20.10.2022 Gazette 2022/42)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.04.2021 CN 202110402621**

(71) Applicant: **Huawei Technologies Co., Ltd.**
**Shenzhen, Guangdong 518129 (CN)**

(72) Inventors:
 • **WU, Hong**
  **Shenzhen, Guangdong 518129 (CN)**
 • **XU, Yiran**
  **Shenzhen, Guangdong 518129 (CN)**
 • **YANG, Weitun**
  **Shenzhen, Guangdong 518129 (CN)**
 • **CHEN, Wendong**
  **Shenzhen, Guangdong 518129 (CN)**
 • **LIU, Meng**
  **Shenzhen, Guangdong 518129 (CN)**
 • **ZHANG, Hua**
  **Shenzhen, Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **IMAGE PROCESSING METHOD AND TERMINAL DEVICE**

(57)    An image processing method is provided. In the method, when a terminal device starts a first camera to perform image shooting, the terminal device may also start a second camera equipped with OIS, and perform, by using a clear frame captured by the second camera equipped with the OIS, deblurring processing on a blurred frame captured by the first camera. In this way, a deblurring effect of the terminal device on the blurred frame is better, and definition consistency of shot pictures displayed by the terminal device is higher.

EP 4 300 941 A1

FIG. 6

**Description**

This application claims priority to Chinese Patent Application No. 202110402621.2, filed with the China National Intellectual Property Administration on April 14, 2021 and entitled "IMAGE PROCESSING METHOD AND TERMINAL DEVICE", which is incorporated herein by reference in its entirety.

**TECHNICAL FIELD**

This application relates to the field of terminals and image processing technologies, and in particular, to an image processing method and a terminal device.

**BACKGROUND**

Currently, when a terminal device is used to perform image shooting in a low-brightness scenario, because a person holds the terminal device and keeps moving, some frames are clear and some frames are blurred in a recorded video, resulting in definition inconsistency of frames. This brings a user a visual feeling of constant "shuttering" of a video picture, and experience is extremely poor.

Generally, to suppress such a phenomenon, a camera of an intelligent terminal may be equipped with an optical image stabilization (optical image stabilization, OIS) physical component. OIS can effectively alleviate the problem of definition inconsistency of frames, but cannot completely resolve the problem. In addition, in consideration of costs of the intelligent terminal, only a frequently used camera is equipped with the OIS, and another lens is not equipped with the OIS.

Therefore, how to improve definition consistency of images shot by the terminal device is still an urgent problem to be resolved.

**SUMMARY**

This application provides an image processing method, to improve definition consistency of images shot by a terminal device.

According to a first aspect, this application provides an image processing method, including: A terminal device starts a first camera in response to a first operation of a user. The terminal device starts a second camera when detecting that the first camera is started. The second camera is equipped with OIS optical image stabilization. The terminal device obtains a first frame captured by the first camera. The terminal device obtains a second frame captured by the second camera. The second frame corresponds to the first frame. The terminal device fuses the second frame into the first frame, to obtain a deblurred frame. The terminal device displays an image of the deblurred frame.

In the foregoing embodiment, when starting the first camera to perform image shooting, the terminal device may also start the second camera equipped with the OIS, and perform, by using the second frame captured by the second camera equipped with the OIS, deblurring processing on the first frame captured by the first camera. In this way, a deblurring effect of the terminal device on the blurred frame can be better, and definition consistency of pictures displayed by the terminal device is higher.

With reference to some embodiments of the first aspect, in some embodiments, before that the terminal device obtains a second frame captured by the second camera, the method further includes: The terminal device determines that the first frame is a blurred frame. Before that the terminal device fuses the second frame into the first frame, to obtain a deblurred frame, the method further includes: The terminal device determines that the second frame is a clear frame.

In the foregoing embodiment, deblurring processing is performed on the blurred frame by using the clear frame, so that the deblurring effect of the terminal device is better.

With reference to some embodiments of the first aspect, in some embodiments, before that the terminal device starts a second camera, the method further includes: The terminal device determines whether the first camera is equipped with the OIS; and if the first camera is not equipped with the OIS, starts the second camera.

In the foregoing embodiment, the terminal device may determine in real time whether a started camera is equipped with the OIS, and the second camera equipped with the OIS is started only when the started camera is not equipped with the OIS, instead of starting another camera equipped with the OIS provided that a camera is started. This reduces power consumption of the terminal device.

With reference to some embodiments of the first aspect, in some embodiments, that the terminal device fuses the second frame into the first frame, to obtain a deblurred frame specifically includes: The terminal device determines registration information for converting the second frame into the first frame. The terminal device fuses the second frame into the first frame based on the registration information, to obtain the deblurred frame.

In the foregoing embodiment, the terminal device fuses the second frame into the first frame based on the registration information, so that fusion is more accurate, and the deblurring effect on the obtained deblurred frame is better.

With reference to some embodiments of the first aspect, in some embodiments, that the terminal device determines registration information for converting the second frame into the first frame specifically includes: The terminal device generates global low-precision registration information based on a feature point extracted after downsampling is performed on the first frame and the second frame. The terminal device generates local high-precision registration information based on a feature point extracted after cropping is performed on the first frame and the second frame. The terminal device calibrates the global low-precision registration information by using the local high-precision registration information, to obtain global high-precision registration information, where the global high-precision registration information is used as the registration information for converting the second frame into the first frame.

In the foregoing embodiment, when performing deblurring processing, the terminal device extracts a feature point after separately downsampling the first frame and the second frame, to obtain the global low-precision registration information through matching, extracts a feature point after separately cropping the first frame and the second frame, to obtain the local high-precision registration information through matching, and then obtains, by calibrating the global low-precision registration information by using the local high-precision registration information, the global high-precision registration information required for performing deblurring processing. This greatly reduces computing power required for performing image registration, so that even the terminal device is a mobile terminal device, real-time deblurring processing may also be implemented. In this way, definition consistency of images shot by the mobile terminal device is higher.

With reference to some embodiments of the first aspect, in some embodiments, that the terminal device generates global low-precision registration information based on a feature point extracted after downsampling is performed on the first frame and the second frame specifically includes: The terminal device extracts a feature point after downsampling the first frame based on a first downsampling ratio, to obtain a first feature point set. The terminal device extracts a feature point after downsampling the second frame based on the first downsampling ratio, to obtain a second feature point set. The terminal device generates, based on the first feature point set and the second feature point set, the global low-precision registration information for converting the second frame into the first frame.

In the foregoing embodiment, the terminal device downsamples the first frame and the second frame by using a same downsampling ratio, so that correspondence between generated images is good, and computing power required for generating the global low-precision registration information is reduced.

With reference to some embodiments of the first aspect, in some embodiments, that the terminal device generates local high-precision registration information based on a feature point extracted after cropping is performed on the first frame and the second frame specifically includes: The terminal device crops the first frame based on a first area ratio, a first center point location, and a first shape, to obtain a first cropping region, and extracts a feature point from the first cropping region to obtain a third feature point set. The first area ratio is a ratio of an area of the first cropping region to a total area of the first frame, the first shape is a shape of the first cropping region, and the first center point location is a location of a center point of the first cropping region relative to a center point of the first frame. The terminal device crops the second frame based on the first area ratio, the first center point location, and the first shape, to obtain a second cropping region, and extracts a feature point from the second cropping region to obtain a fourth feature point set. The terminal device generates, based on the third feature point set and the fourth feature point set, the local high-precision registration information for converting the second cropping region into the first cropping region.

In the foregoing embodiment, the terminal device crops the first frame and the second frame by using a same cropping configuration, so that correspondence between generated images is good, and computing power required for generating the local high-precision registration information is reduced.

With reference to some embodiments of the first aspect, in some embodiments, the first downsampling ratio is a preset downsampling ratio; or the first downsampling ratio is a downsampling ratio determined by the terminal device based on a real-time computing capability.

With reference to some embodiments of the first aspect, in some embodiments, the first area ratio is a preset ratio; or the first area ratio is a ratio determined by the terminal device based on a real-time computing capability.

In the foregoing embodiment, the first downsampling ratio or the first area ratio may be determined by the terminal device based on the real-time computing capability, so that even when the computing power of the terminal device is low, deblurring processing may also be completed in real time.

With reference to some embodiments of the first aspect, in some embodiments, the first center point location is a center point of a frame.

In the foregoing embodiment, a center point of a frame is used as a center point of cropping, so that a resolution of a central region concerned by the user is not lost, a deblurring effect is optimal, and human-computer interaction performance of the terminal device is improved.

With reference to some embodiments of the first aspect, in some embodiments, the first shape is a rectangle or a square.

In the foregoing embodiment, a rectangle or a square is used as a cropping shape, so that a matrix of feature points is more regular during feature extraction and subsequent feature comparison, and computing power required for calibrating the registration information to obtain the global high-precision registration information is reduced.

With reference to some embodiments of the first aspect, in some embodiments, that the terminal device obtains a second frame captured by the second camera specifically includes: The terminal device sends a clear frame selection identifier to the second camera. The clear frame selection identifier includes time information and blur degree information of the first frame. The terminal device receives the second frame that corresponds to the first frame and that is fed back by the second camera.

In the foregoing embodiment, the second camera feeds back, based on the clear frame selection identifier, the clear frame that matches the blurred frame, so that a computing power requirement of a primary processor in the terminal device is reduced.

With reference to some embodiments of the first aspect, in some embodiments, the second frame is a frame, in frames captured by the second camera, whose capture time interval with the first frame is within first preset duration, and whose blur degree does not exceed a preset blur threshold compared with a blur degree of the first frame.

In the foregoing embodiment, the capture time interval between the second frame and the first frame is limited to be within the first preset duration and the blur degree does not exceed the preset blur threshold, and a clearest frame captured by the second camera is not used, so that it is ensured that a frame picture does not change greatly when the second frame is fused into the first frame. This ensures continuity of a finally displayed frame picture, and improves definition consistency of the images shot by the terminal device.

According to a second aspect, this application provides a terminal device. The terminal device includes: a first starting module, configured to start a first camera in response to a first operation of a user; a second starting module, configured to start a second camera when it is detected that the first camera is started, where the second camera is equipped with OIS optical image stabilization; a first obtaining module, configured to obtain a first frame captured by the first camera; a second obtaining module, configured to obtain a second frame captured by the second camera, where the second frame corresponds to the first frame; a fusion module, configured to fuse the second frame into the first frame, to obtain a deblurred frame; and a display module, configured to display an image of the deblurred frame.

With reference to some embodiments of the second aspect, in some embodiments, the terminal device further includes: a first determining module, configured to determine that the first frame is a blurred frame; and a second determining module, configured to determine that the second frame is a clear frame. With reference to some embodiments of the second aspect, in some embodiments, the terminal device further includes: a third determining module, configured to determine, when the first camera is started, whether the first camera is equipped with the OIS; and a third starting module, configured to start the second camera when the third determining module determines that the first camera is not equipped with the OIS.

With reference to some embodiments of the second aspect, in some embodiments, the fusion module specifically includes: a registration unit, configured to determine registration information for converting the second frame into the first frame; and a fusion unit, configured to fuse the second frame into the first frame based on the registration information, to obtain the deblurred frame.

With reference to some embodiments of the second aspect, in some embodiments, the registration module specifically includes: a first registration subunit, configured to generate global low-precision registration information based on a feature point extracted after downsampling is performed on the first frame and the second frame; a second registration subunit, configured to generate local high-precision registration information based on a feature point extracted after cropping is performed on the first frame and the second frame; and a third registration subunit, configured to calibrate the global low-precision registration information by using the local high-precision registration information, to obtain global high-precision registration information, where the global high-precision registration information is used as the registration information for converting the second frame into the first frame.

With reference to some embodiments of the second aspect, in some embodiments, the first registration subunit specifically includes: a first feature subunit, configured to extract a feature point after downsampling the first frame based on a first downsampling ratio, to obtain a first feature point set; a second feature subunit, configured to extract a feature point after downsampling the second frame based on the first downsampling ratio, to obtain a second feature point set; and a global low-precision registration subunit, configured to generate, based on the first feature point set and the second feature point set, the global low-precision registration information for converting the second frame into the first frame.

With reference to some embodiments of the second aspect, in some embodiments, the second registration subunit specifically includes: a third feature subunit, configured to: crop the first frame based on a first area ratio, a first center point location, and a first shape, to obtain a first cropping region, and extract a feature point from the first cropping region to obtain a third feature point set, where the first area ratio is a ratio of an area of the first cropping region to a total area of the first frame, the first shape is a shape of the first cropping region, and the first center point location is a location of a center point of the first cropping region relative to a center point of the first frame; a fourth feature subunit, configured to: crop the second frame based on the first area ratio, the first center point location, and the first shape, to obtain a second cropping region, and extract a feature point from the second cropping region to obtain a fourth feature point set; and a local high-precision registration subunit, configured to generate, based on the third feature point set and the fourth feature point set, the local high-precision registration information for converting the second cropping region into the first cropping region.

With reference to some embodiments of the second aspect, in some embodiments, the first downsampling ratio is a preset downsampling ratio; or the first downsampling ratio is a downsampling ratio determined by the terminal device based on a real-time computing capability.

With reference to some embodiments of the second aspect, in some embodiments, the first area ratio is a preset ratio; or the first area ratio is a ratio determined by the terminal device based on a real-time computing capability.

With reference to some embodiments of the second aspect, in some embodiments, the first center point location is a center point of a frame.

With reference to some embodiments of the second aspect, in some embodiments, the first shape is a rectangle or a square.

With reference to some embodiments of the second aspect, in some embodiments, the second obtaining module specifically includes: an identifier sending unit, configured to send a clear frame selection identifier to the second camera, where the clear frame selection identifier includes time information and blur degree information of the first frame; and a feedback receiving unit, configured to receive the second frame that corresponds to the first frame and that is fed back by the second camera.

With reference to some embodiments of the second aspect, in some embodiments, the second frame is a frame, in frames captured by the second camera, whose capture time interval with the first frame is within first preset duration, and whose blur degree does not exceed a preset blur threshold compared with a blur degree of the first frame.

According to a third aspect, this application provides a terminal device. The terminal device includes one or more processors, a memory, a first camera, a second camera, and a display. The memory is coupled to the one or more processors, the memory is configured to store computer program code, the computer program code includes computer instructions, and the one or more processors invoke the computer instructions, so that the terminal device performs the following operations: starting the first camera in response to a first operation of a user; starting the second camera when detecting that the first camera is started, where the second camera is equipped with OIS; obtaining a first frame captured by the first camera; obtaining a second frame captured by the second camera, where the second frame corresponds to the first frame; fusing the second frame into the first frame, to obtain a deblurred frame; and displaying an image of the deblurred frame.

With reference to some embodiments of the third aspect, in some embodiments, the one or more processors are further configured to invoke the computer instructions, so that the terminal device performs the following operations: determining that the first frame is a blurred frame; and determining that the second frame is a clear frame.

With reference to some embodiments of the third aspect, in some embodiments, the one or more processors are further configured to invoke the computer instructions, so that the terminal device performs the following operations: determining whether the first camera is equipped with the OIS; and if the first camera is not equipped with the OIS, starting the second camera.

With reference to some embodiments of the third aspect, in some embodiments, the one or more processors are specifically configured to invoke the computer instructions, so that the terminal device performs the following operations: determining registration information for converting the second frame into the first frame; and fusing the second frame into the first frame based on the registration information, to obtain the deblurred frame.

With reference to some embodiments of the third aspect, in some embodiments, the one or more processors are specifically configured to invoke the computer instructions, so that the terminal device performs the following operations: generating global low-precision registration information based on a feature point extracted after downsampling is performed on the first frame and the second frame; generating local high-precision registration information based on a feature point extracted after cropping is performed on the first frame and the second frame; and calibrating the global low-precision registration information by using the local high-precision registration information, to obtain global high-precision registration information, where the global high-precision registration information is used as the registration information for converting the second frame into the first frame.

With reference to some embodiments of the third aspect, in some embodiments, the one or more processors are specifically configured to invoke the computer instructions, so that the terminal device performs the following operations: extracting a feature point after downsampling the first frame based on a first downsampling ratio, to obtain a first feature point set; extracting a feature point after downsampling the second frame based on the first downsampling ratio, to obtain a second feature point set; and generating, based on the first feature point set and the second feature point set, the global low-precision registration information for converting the second frame into the first frame.

With reference to some embodiments of the third aspect, in some embodiments, the one or more processors are specifically configured to invoke the computer instructions, so that the terminal device performs the following operations: cropping the first frame based on a first area ratio, a first center point location, and a first shape, to obtain a first cropping region, and extracting a feature point from the first cropping region to obtain a third feature point set, where the first area ratio is a ratio of an area of the first cropping region to a total area of the first frame, the first shape is a shape of the first cropping region, and the first center point location is a location of a center point of the first cropping region relative to a center point of the first frame; cropping the second frame based on the first area ratio, the first center point location, and the first shape, to obtain a second cropping region, and extracting a feature point from the second cropping region to obtain a fourth feature point set; and generating, based on the third feature point set and the fourth feature point set, the local high-precision registration information for converting the second cropping region into the first cropping region.

With reference to some embodiments of the third aspect, in some embodiments, the first downsampling ratio is a preset downsampling ratio; or the first downsampling ratio is a downsampling ratio determined by the terminal device based on a real-time computing capability.

With reference to some embodiments of the third aspect, in some embodiments, the first area ratio is a preset ratio; or the first area ratio is a ratio determined by the terminal device based on a real-time computing capability.

With reference to some embodiments of the third aspect, in some embodiments, the first center point location is a center point of a frame.

With reference to some embodiments of the third aspect, in some embodiments, the first shape is a rectangle or a square.

With reference to some embodiments of the third aspect, in some embodiments, the one or more processors are specifically configured to invoke the computer instructions, so that the terminal device performs the following operations: sending a clear frame selection identifier to the second camera, where the clear frame selection identifier includes time information and blur degree information of the first frame; and receiving the second frame that corresponds to the first frame and that is fed back by the second camera.

With reference to some embodiments of the third aspect, in some embodiments, the second frame is a frame, in frames captured by the second camera, whose capture time interval with the first frame is within first preset duration, and whose blur degree does not exceed a preset blur threshold compared with a blur degree of the first frame.

According to a fourth aspect, an embodiment of this application provides a chip system. The chip system is applied to a terminal device, the chip system includes one or more processors, and the processor is configured to invoke computer instructions, so that the terminal device performs the method described in any one of the first aspect and the possible implementations of the first aspect.

According to a fifth aspect, an embodiment of this application provides a computer program product including instructions. When the computer program product runs on a terminal device, the terminal device is enabled to perform the method described in any one of the first aspect and the possible implementations of the first aspect.

According to a sixth aspect, an embodiment of this application provides a computer-readable storage medium, including instructions. When the instructions are run on a terminal device, the terminal device is enabled to perform the method described in any one of the first aspect and the possible implementations of the first aspect.

It may be understood that the terminal device provided in the second aspect, the terminal device provided in the third aspect, the chip system provided in the fourth aspect, the computer program product provided in the fifth aspect, and the computer storage medium provided in the sixth aspect are all configured to perform the method provided in embodiments of this application. Therefore, for beneficial effects that can be achieved by the terminal device, the chip system, the computer program product, and the computer storage medium, refer to beneficial effects in the corresponding method. Details are not described herein again.

**BRIEF DESCRIPTION OF DRAWINGS**

FIG. 1 is a schematic diagram of an information flow for performing image processing;
FIG. 2 is a schematic diagram of an information flow of an image processing method according to an embodiment of this application;
FIG. 3 is a schematic diagram of an example comparison of deblurring effects obtained after clear frames with different definitions are fused with a blurred frame according to an embodiment of this application;
FIG. 4 is a schematic diagram of an example comparison of an image captured by a camera equipped with OIS and an image captured by a camera not equipped with the OIS according to an embodiment of this application;
FIG. 5 is a schematic diagram of an information flow for performing image processing according to an embodiment of this application;
FIG. 6 is a schematic diagram of another information flow for performing image processing according to an embodiment of this application;
FIG. 7 is a schematic diagram of an example of a hardware structure of a terminal device 100 according to an embodiment of this application;

FIG. 8A and FIG. 8B are a schematic flowchart of an image processing method according to an embodiment of this application;

FIG. 9 is a schematic diagram of an example of downsampling a frame and extracting a feature point according to an embodiment of this application;

FIG. 10 is a schematic diagram of an example scenario of generating low-precision registration information according to an embodiment of this application;

FIG. 11 is a schematic diagram of an example scenario of cropping a frame and extracting a feature point according to an embodiment of this application;

FIG. 12 is a schematic diagram of an example scenario of generating local high-precision registration information according to an embodiment of this application;

FIG. 13 is a schematic diagram of an example scenario of fusing a clear frame Q1 into a blurred frame M1 according to an embodiment of this application;

FIG. 14A and FIG. 14B are a schematic flowchart of another image processing method according to an embodiment of this application;

FIG. 15 is a schematic flowchart of still another image processing method according to an embodiment of this application; and

FIG. 16 is a schematic flowchart of yet another image processing method according to an embodiment of this application.

## DESCRIPTION OF EMBODIMENTS

Terms used in the following embodiments of this application are merely intended to describe specific embodiments, but are not intended to limit this application. As used in the specification of this application and the appended claims, the singular expression "a", "an", "the", "the foregoing", "such a", or "this" is also intended to include a plural expression unless otherwise clearly indicated in the context. It should also be understood that, the term "and/or" used in this application indicates and includes any or all possible combinations of one or more of the listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

An embodiment of this application provides an image processing method, to improve definition of an image shot by a terminal device.

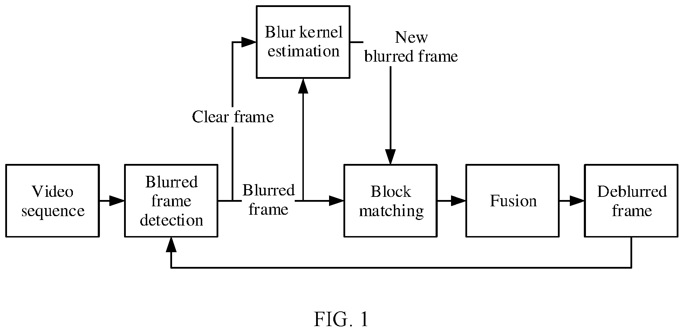

In an implementation, as shown in FIG. 1, a video sequence may be first input into a blurred frame detection module, to determine which frames are blurred and which frames are clear. When it is determined that a current frame is a blurred frame, a blur kernel is generated by using the blurred frame. A clear frame that best matches the blurred frame is selected, and the blur kernel is applied to the clear frame to generate a new blurred frame. Block matching is performed between the new blurred frame and the original blurred frame to obtain registration information through calculation. Finally, the new blurred frame is fused into the original blurred frame based on the registration information, to obtain a deblurred frame. A final deblurred video may be obtained by repeating this step for a plurality of times.

However, in this implementation, an effect is limited by a definition degree of a clear frame in a current video sequence. In addition, during registration, the clear frame is blurred first, and then block matching is performed. Calculation complexity of the operation is extremely high, and iterative solution needs to be performed for a plurality of times. As a result, computing power of a current mobile terminal device cannot support real-time running of the mobile terminal device when the mobile terminal device processes a high-definition image (for example, an image with a resolution of 4K or 1080p).

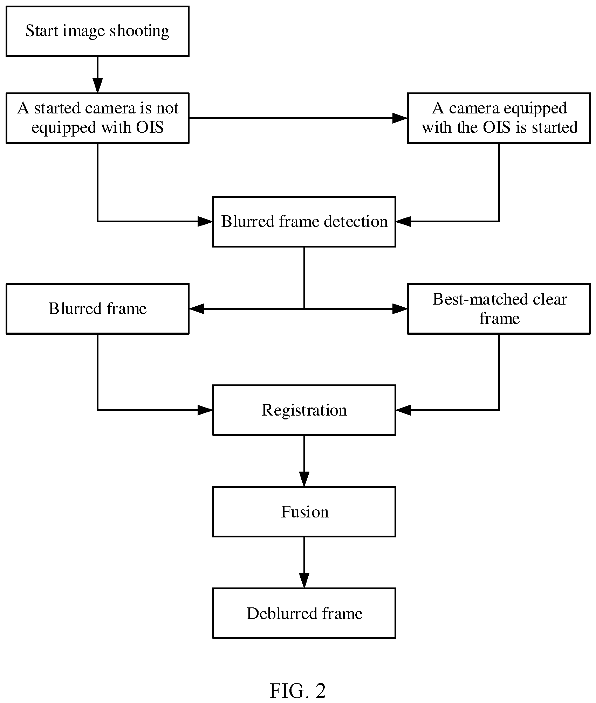

However, in an image processing method according to an embodiment of this application, as shown in FIG. 2, when a started camera is not equipped with OIS, another camera equipped with the OIS is also started to start performing image shooting, and blurred frame detection is simultaneously performed on video frames output by the two cameras. Then, a clear frame best matching a current blurred frame is selected and sent to a registration module for registration, and the clear frame and the blurred frame are fused to obtain a deblurred frame, so that the blurred frame is replaced with the clearer deblurred frame. This improves definition consistency of images shot by a terminal device.

It may be understood that image shooting in this embodiment of this application may be taking a photo, or may be photographing. This is not limited herein.

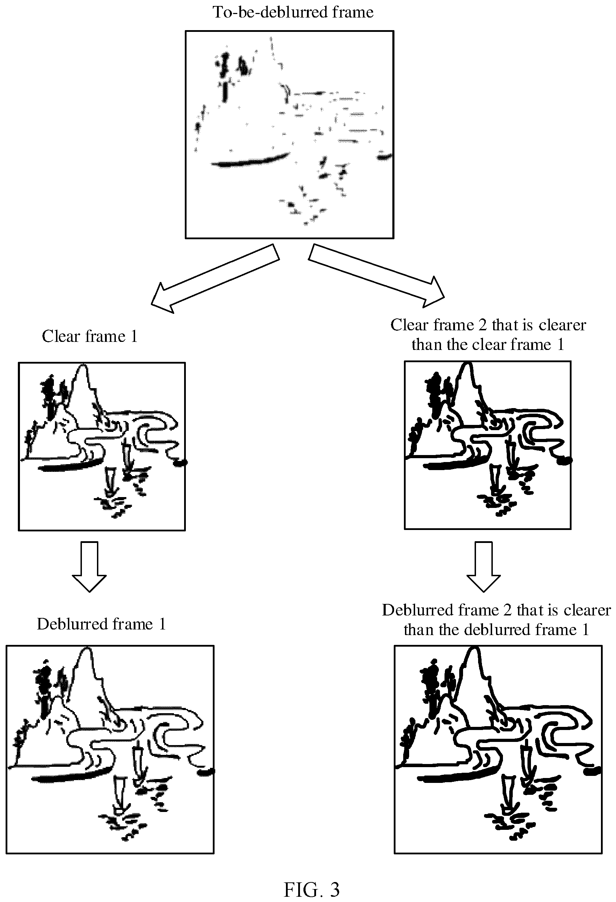

FIG. 3 is a schematic diagram of an example comparison of deblurring effects of deblurred frames obtained after clear frames with different definitions are fused with a blurred frame. It can be learned that a clearer clear frame that is fused with the blurred frame indicates a better deblurring effect on the blurred frame.

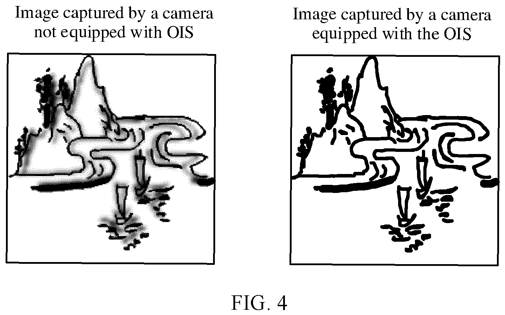

FIG. 4 is a schematic diagram of an example comparison of an image captured by a camera equipped with OIS and an image captured by a camera not equipped with the OIS. It can be learned that the image captured by the camera equipped with the OIS is clearer than the image captured by the camera not equipped with the OIS.

In the image processing method provided in this application, the terminal device not only searches for a clear frame from a video sequence shot by a camera that is not equipped with OIS, but also starts, when the camera is started, another camera equipped with the OIS. A clear frame matching a blurred frame can be searched from frames captured by the camera equipped with the OIS. Because the camera equipped with the OIS can obtain more clear frames, after the image processing method is used, a deblurring effect on the blurred frame can be better, and definition consistency of images shot by the terminal device is higher.

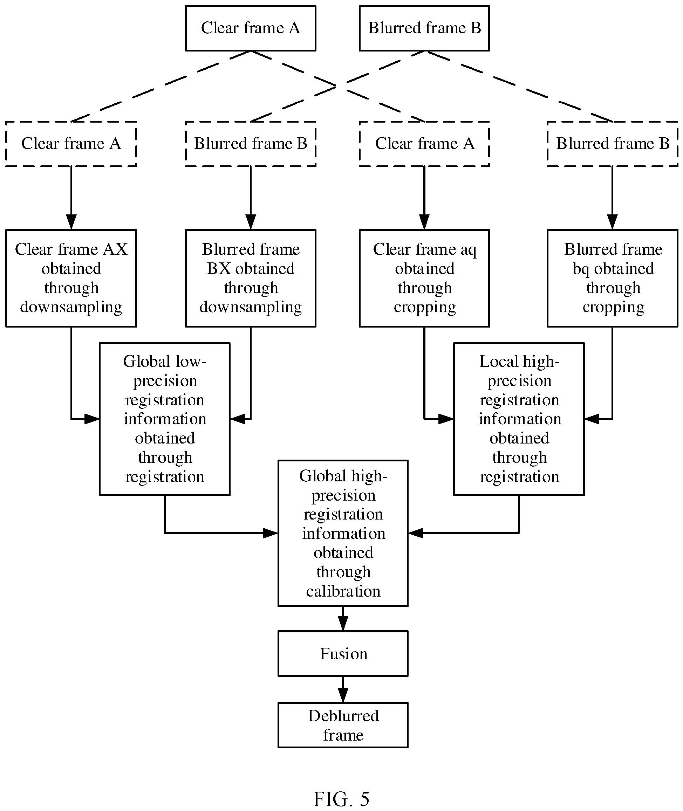

In another image processing method according to an embodiment of this application, as shown in FIG. 5, when a clear frame A and a blurred frame B need to be fused, a terminal device may downsample the clear frame A and the blurred frame B to obtain global low-precision registration information, and may further crop corresponding specific regions of the clear frame A and the blurred frame B to obtain local high-precision registration information. Then, the local high-precision registration information is used to improve precision of the global low-precision registration information, to obtain global high-precision registration information. Finally, the clear frame A and the blurred frame B are fused by using the global high-precision registration information, to obtain a deblurred frame, so that the blurred frame is replaced with the clearer deblurred frame. This improves definition consistency of images shot by the terminal device.

It may be understood that, the global low-precision registration information is obtained after downsampling is performed on the clear frame and the blurred frame. This greatly reduces a calculation amount required for obtaining global registration information. When the terminal device is a mobile terminal device, the mobile terminal device can perform related calculation in real time. Correspondingly, only local high-precision registration information of a small part obtained after cropping is performed on the clear frame and the blurred frame is calculated. This also greatly reduces a calculation amount required for obtaining high-precision registration information between pictures in the clear frame and the blurred frame, so that the mobile terminal device can perform related calculation in real time. Therefore, after the image processing method is used, a calculation amount required by a mobile terminal to perform fusion of a clear frame and a blurred frame is greatly reduced, and the mobile terminal can perform related processing in real time, so that definition consistency of images shot by the terminal device is higher.

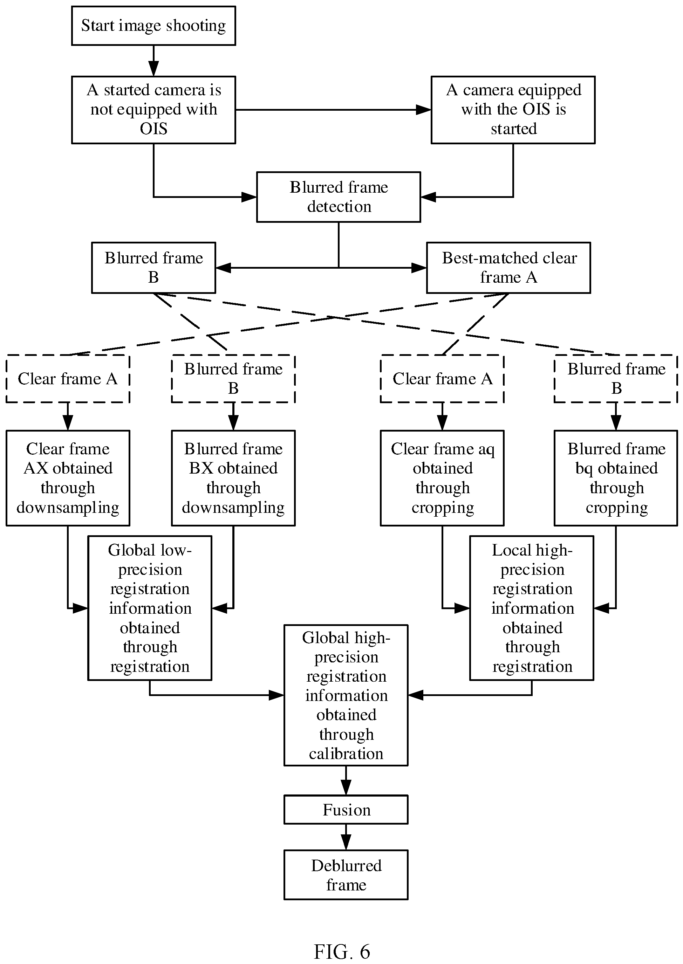

It may be understood that, the image processing methods according to embodiments of this application may alternatively be used in combination. As shown in FIG. 6, when a started camera is not equipped with OIS, a terminal device may also start another camera equipped with the OIS to start performing image shooting, and simultaneously perform blurred frame detection on video frames input by the two cameras. When the camera not equipped with the OIS shoots a blurred frame, a clear frame that is shot by the camera equipped with the OIS and that best matches the blurred frame may be selected. Global low-precision registration information is obtained through registration after downsampling. In addition, local high-precision registration information is obtained through registration after cropping. Then, the local high-precision registration information is used to calibrate the global low-precision registration information, to obtain global high-precision registration information. The clear frame is fused into the blurred frame by using the global high-precision registration information, to obtain a deblurred frame, so that the blurred frame is replaced with the clearer deblurred frame. This improves definition consistency of images shot by the terminal device.

In this way, definition consistency of images shot by the terminal device can be higher. In addition, because a calculation amount required for registration and fusion of the clear frame and the blurred frame is greatly reduced, even if the terminal device is a mobile terminal device having low computing power, related calculation can be performed in real time, so that definition consistency of shot images is improved in real time.

The following describes an example terminal device 100 according to embodiments of this application.

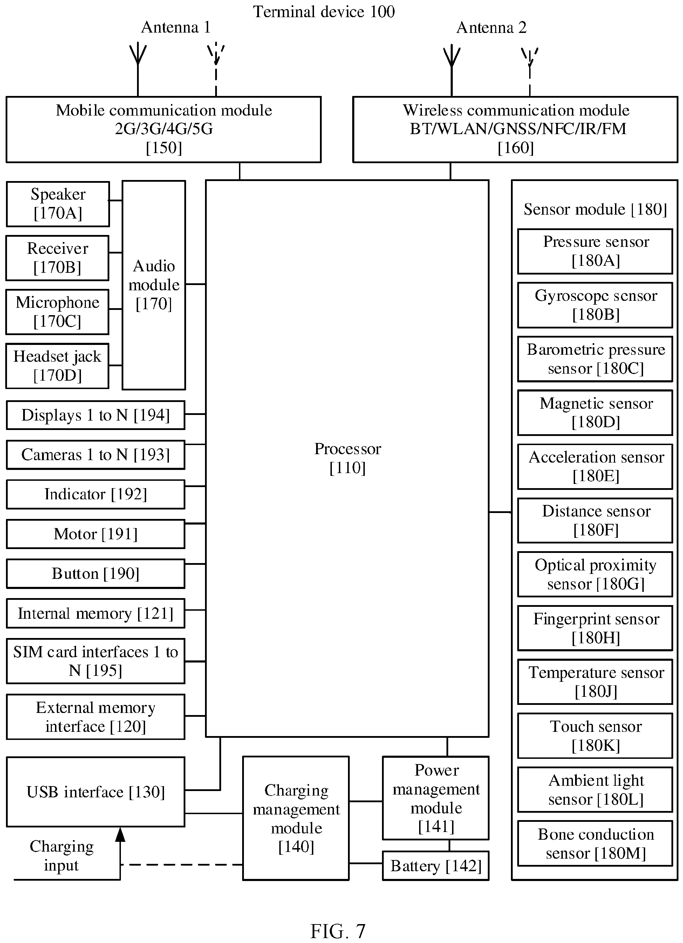

FIG. 7 is a schematic diagram of a structure of a terminal device 100 according to an embodiment of this application.

The terminal device 100 is used as an example below to describe embodiments in detail. It should be understood that the terminal device 100 may have more or fewer components than those shown in the figure, or may combine two or more components, or may have different component configurations. Various components shown in the figure may be implemented in hardware including one or more signal processing and/or application-specific integrated circuits, software, or a combination of hardware and software.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, one or more cameras 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to the charger to charge the terminal device 100, or may be configured to transmit data between the terminal device 100 and a peripheral device, or may be configured to connect to a headset for playing an audio through the headset. The interface may alternatively be used to connect to another terminal device, for example, an AR device.

It may be understood that an interface connection relationship between the modules illustrated in this embodiment of this application is merely an example for description, and does not constitute a limitation on the structure of the terminal device 100. In some other embodiments of this application, the terminal device 100 may alternatively use different interface connection manners in the foregoing embodiments or a combination of a plurality of interface connection manners.

The charging management module 140 is configured to receive a charging input from the charger. The charger may be a wireless charger or a wired charger.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 can be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a wireless communication solution that is applied to the terminal device 100 and that is used for 2G, 3G, 4G, 5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using a GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 100 may include one or N displays 194, where N is a positive integer greater than 1.

The terminal device 100 may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

In this embodiment of this application, the one or N cameras 193 may include a camera equipped with OIS and a camera not equipped with the OIS. This is not limited herein.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal device 100, for example, image recognition, facial recognition, speech recognition, and text understanding, can be implemented by using the NPU.

The internal memory 121 may include one or more random access memories (random access memories, RAMs) and one or more nonvolatile memories (nonvolatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, usually referred to as a DDR5 SDRAM), and the like.

The nonvolatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like according to storage specifications.

The random access memory may be directly read and written by using the processor 110, and may be configured to store an executable program (for example, a machine instruction) of an operating system or another running program, and may be further configured to store data of a user, data of an application, and the like.

The nonvolatile memory may also store an executable program, data of a user, data of an application, and the like, which may be loaded into the random access memory in advance for directly reading and writing by the processor 110.

The external memory interface 120 may be configured to connect to an external nonvolatile memory, to extend a storage capability of the terminal device 100. The external nonvolatile memory communicates with the processor 110 through the external memory interface 120, to implement a data storage function. For example, files such as music and videos are stored in the external nonvolatile memory.

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal device 100 may be used to listen to music or answer a hands-free call through the speaker 170A.

The receiver 170B, also referred to as an "earpiece", is configured to convert an electrical audio signal into a sound signal. When a call is answered or a voice message is received by using the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects intensity of the touch operation by using the pressure sensor 180A. The terminal device 100 may further calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating a new SMS message is performed.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during image shooting. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover based on the magnetic sensor 180D. Further, a feature such as automatic unlocking of the flip cover is set based on a detected opening or closing state of a leather case or a detected opening or closing state of the flip cover.

The acceleration sensor 180E may detect values of accelerations of the terminal device 100 in various directions (usually on three axes). A magnitude and a direction of gravity may be detected when the terminal device 100 is stationary. The acceleration sensor 180E may be further configured to identify a posture of the terminal device, and is used in an application such as switching between a landscape mode and a portrait mode or a pedometer.

The distance sensor 180F is configured to measure a distance. The terminal device 100 may measure a distance by using infrared light or a laser. In some embodiments, in an image shooting scenario, the terminal device 100 may measure a distance by using the distance sensor 180F, to implement fast focusing.

The optical proximity sensor 180G may include, for example, a light emitting diode (LED) and an optical detector, for example, a photodiode. The light emitting diode may be an infrared light emitting diode. The terminal device 100 emits infrared light outward by using the light emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device 100 at a location different from a location of the display 194.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time prompt, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 can support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The terminal device 100 interacts with a network by using the SIM card, to implement functions such as calling and data communication.

In this embodiment of this application, the processor 110 may invoke, based on the image captured by the camera 194, the operation instructions stored in the internal memory 121, to perform the image processing method in this embodiment of this application, to improve definition of an image shot by the terminal device, and send the image to the display 194 for display.

The following describes some application scenarios in embodiments of this application with reference to the hardware structure of the example terminal device 100.

For example, in an application scenario, a terminal device A has one front-facing camera and two rear-facing cameras. The two rear-facing cameras are respectively a primary camera with high image definition and equipped with OIS and a wide-angle camera with a wide angle of view and a short focal length. If a user needs to take a photo or video with high definition, the user can enable the primary camera to perform image shooting. If the user needs to take a photo or video with a wider picture range, the user can enable the wide-angle camera to perform image shooting.

The primary camera and the wide-angle camera are separately used based on a selection of the user. The terminal device A starts the wide-angle camera to perform image shooting by default during image shooting, to obtain a photo or video with a wide picture range. If the user needs to take a photo or video with higher definition, a shooting mode needs to be adjusted to a high-definition shooting mode. In this case, the terminal device A disables the wide-angle camera, and switches to start the primary camera to perform image shooting. In this case, a shot photo or video has a higher resolution but a smaller picture range.

However, after the image processing method in embodiments of this application is used, the terminal device A also starts the primary camera when starting the wide-angle camera by default to perform image shooting, and may display a text prompt box on a display to prompt the user: "The primary camera will also be used to improve definition of the picture shot by the wide-angle camera". When the wide-angle camera works, the terminal device A starts the primary camera to work, and performs, by using a frame with higher definition captured by the primary camera, deblurring processing on a blurred frame captured by the wide-angle camera, so that a finally shot picture is clearer and has a wide picture range.

For example, in another application scenario, a terminal device A has one front-facing camera and three rear-facing cameras. The three rear-facing cameras are respectively a primary camera with high image definition and equipped with OIS, a wide-angle camera with a wide angle of view and a short focal length, and a telephoto camera with a small angle of view and a long focal length. If a user needs to take a photo or video with high definition, the user can enable the primary camera to perform image shooting. If the user needs to take a photo or video with a wider picture range, the user can enable the wide-angle camera to perform image shooting. If the user needs to shoot a scene at a farther distance, the user can enable the telephoto camera to perform image shooting.

The primary camera, the wide-angle camera, and the telephoto camera are separately used based on a selection of the user. The terminal device A starts the wide-angle camera to perform image shooting by default during image shooting, to obtain a photo or video with a wide picture range. If the user needs to take a photo or video with higher definition, a shooting mode needs to be adjusted to a high-definition shooting mode. In this case, the terminal device A disables the wide-angle camera, and switches to start the primary camera to perform image shooting. In this case, a shot photo or video has a higher resolution but a smaller picture range. If the user needs to shoot a scene at a farther distance, the shooting mode needs to be adjusted to a telephoto shooting mode. In this case, the terminal device A disables another camera, and switches to start the telephoto camera to perform image shooting. In this case, the scene at the farther distance can be shot, but a shot photo or video has a small angle of view and a low resolution.

However, after the image processing method in embodiments of this application is used, the terminal device A also starts the primary camera when starting the wide-angle camera by default to perform image shooting, and may display a text prompt box on a display to prompt the user: "The primary camera will also be used to improve definition of the picture shot by the wide-angle camera". When the wide-angle camera works, the terminal device A starts the primary camera to work, and performs, by using a frame with higher definition captured by the primary camera, deblurring processing on a blurred frame captured by the wide-angle camera, so that a finally shot picture is clearer and has a wide picture range.

If the user wants to shoot a scene at a far distance, the shooting mode is adjusted to the telephoto shooting mode. The terminal device A may also start the primary camera when starting the telephoto camera, and may display a text prompt box on the display to prompt the user: "The primary camera will also be used to improve definition of the picture shot by the telephoto camera". When the wide-angle camera works, the terminal device A starts the primary camera to work, and performs, by using a frame with higher definition captured by the primary camera, deblurring processing on a blurred frame captured by the telephoto camera, so that the scene at the far distance can be shot, and a picture is very clear.

For example, in another application scenario, a terminal device A has one front-facing camera and four rear-facing cameras. The four rear-facing cameras are respectively a primary camera with high image definition and equipped with OIS, a wide-angle camera with a wide angle of view and a short focal length, a telephoto camera 1 with a small angle of view and a long focal length and equipped with the OIS, and a telephoto camera 2 with a longer focal length. If a user needs to take a photo or video with high definition, the user can enable the primary camera to perform image shooting. If the user needs to take a photo or video with a wider picture range, the user can enable the wide-angle camera to perform image shooting. If the user needs to shoot a scene at a far distance, the user can enable the telephoto camera 1 to perform image shooting. If the user needs to shoot a scene at a farther distance, the user can enable the telephoto camera 2 to perform image shooting.

The primary camera, the wide-angle camera, the telephoto camera 1, and the telephoto camera 2 are used separately based on a selection of the user. The terminal device A starts the wide-angle camera to perform image shooting by default during image shooting, to obtain a photo or video with a wide picture range. If the user needs to take a photo or video with higher definition, a shooting mode needs to be adjusted to a high-definition shooting mode. In this case, the terminal device A disables the wide-angle camera, and switches to start the primary camera to perform image shooting. In this case, a shot photo or video has a higher resolution but a smaller picture range. If the user needs to shoot a scene at a far distance, the shooting mode needs to be adjusted to a telephoto shooting mode. In this case, the terminal device A disables another camera, and switches to start the telephoto camera 1 to perform image shooting. In this case, the scene at the far distance can be shot. If the user needs to shoot a scene at a farther distance, the shooting mode needs to be adjusted to a super telephoto shooting mode. In this case, the terminal device A disables another camera, and switches to start the telephoto camera 2 to perform image shooting. In this case, the scene at the farther distance can be shot, but a shot photo or video has a small angle of view and a low resolution.

However, after the image processing method in embodiments of this application is used, the terminal device A also starts the primary camera when starting the wide-angle camera by default to perform image shooting, and may display a text prompt box on a display to prompt the user: "The primary camera will also be used to improve definition of the picture shot by the wide-angle camera". When the wide-angle camera works, the terminal device A starts the primary camera to work, and performs, by using a frame with higher definition captured by the primary camera, deblurring processing on a blurred frame captured by the wide-angle camera, so that a finally shot picture is clearer and has a wide picture range.

If the user wants to shoot a scene at a very far distance, the shooting mode is adjusted to the super telephoto shooting mode. The terminal device A may also start the telephoto camera 1 when starting the telephoto camera 2, and may display a text prompt box on the display to prompt the user: "The telephoto camera 1 will also be used to improve definition of the picture shot by the telephoto camera 2". When the telephoto camera 1 works, the terminal device A starts the telephoto camera 2 to work, and performs, by using a frame with higher definition captured by the telephoto camera 1, deblurring processing on a blurred frame captured by the telephoto camera 2, so that the scene at the farther distance can be shot, and a picture is very clear.

For example, in another application scenario, a terminal device A has one front-facing camera and three rear-facing cameras. The three rear-facing cameras are respectively a primary camera with high image definition, a wide-angle camera with a wide angle of view and a short focal length, and an image stabilization camera equipped with OIS. If a user needs to take a photo or video with high definition, the user can enable the primary camera to perform image shooting. If the user needs to take a photo or video with a wider picture range, the user can enable the wide-angle camera to perform image shooting. If the user needs to shoot a scene during movement, the user can enable the image stabilization camera to perform image shooting.

The primary camera, the wide-angle camera, and the image stabilization camera are used separately based on a selection of the user. The terminal device A starts the wide-angle camera to perform image shooting by default during image shooting, to obtain a photo or video with a wide picture range. If the user needs to take a photo or video with higher definition, a shooting mode needs to be adjusted to a high-definition shooting mode. In this case, the terminal device A disables the wide-angle camera, and switches to start the primary camera to perform image shooting. In this case, a shot photo or video has a higher resolution but a smaller picture range. If the user needs to perform image shooting during movement, the shooting mode needs to be adjusted to an image stabilization mode. In this case, the terminal device A disables another camera, and switches to start the image stabilization camera to perform image shooting, so that a picture shot during movement can be kept stable.

However, after the image processing method in embodiments of this application is used, the terminal device A also starts the image stabilization camera when starting the wide-angle camera by default to perform image shooting, and may display a text prompt box on a display to prompt the user: "The image stabilization camera will also be used to improve definition of the picture shot by the wide-angle camera". When the wide-angle camera works, the terminal device A starts the image stabilization camera to work, and performs, by using a frame with stable definition captured by the image stabilization camera, deblurring processing on a blurred frame captured by the wide-angle camera, so that a finally shot picture is clearer and more stable.

If the user wants to shoot a clearer picture, after the shooting mode is adjusted to a high-definition shooting mode, the terminal device A may also start the image stabilization camera when starting the primary camera to perform image shooting, and may display a text prompt box on the display to prompt the user: "The image stabilization camera will also be used to improve stability of the picture shot by the primary camera". When the primary camera works, the terminal device A starts the image stabilization camera to work, and performs, by using a frame with stable definition captured by the image stabilization camera, deblurring processing on a blurred frame captured by the primary camera, so that a finally shot picture is clearer and more stable.

It may be understood that, in addition to the foregoing several example application scenarios, in some other application scenarios, the terminal device may further have more or fewer cameras, and the cameras may further have various other different functions. This is not limited herein.

The following specifically describes the image processing method in embodiments of this application with reference to the hardware structure of the example terminal device 100 and some specific application scenarios.

Application scenario 1: A terminal device includes a camera A that has a wide-angle lens and is not equipped with OIS, and a camera B that has an image stabilization function and is equipped with the OIS. A user starts the camera A to perform image shooting.

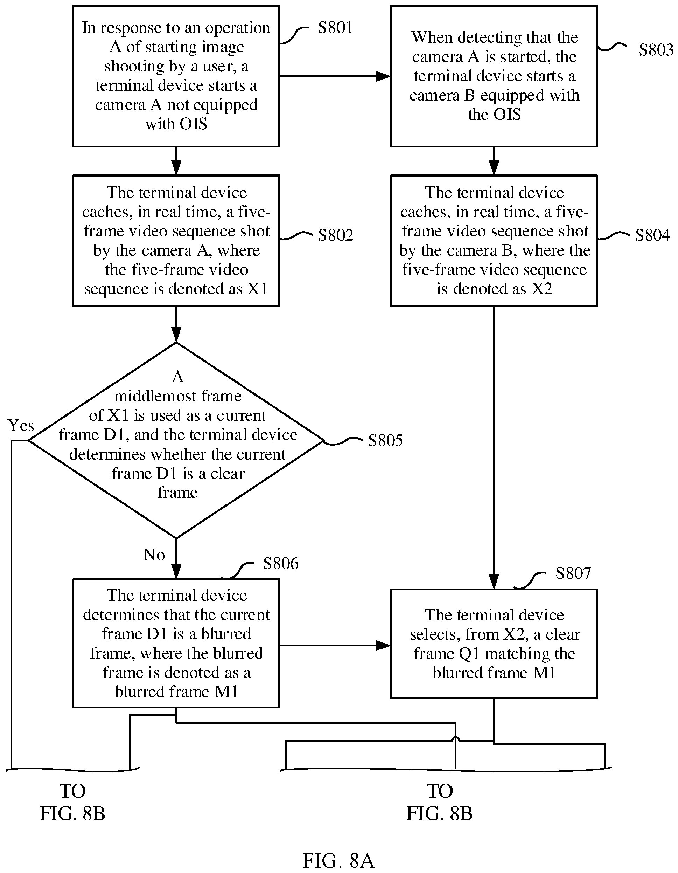

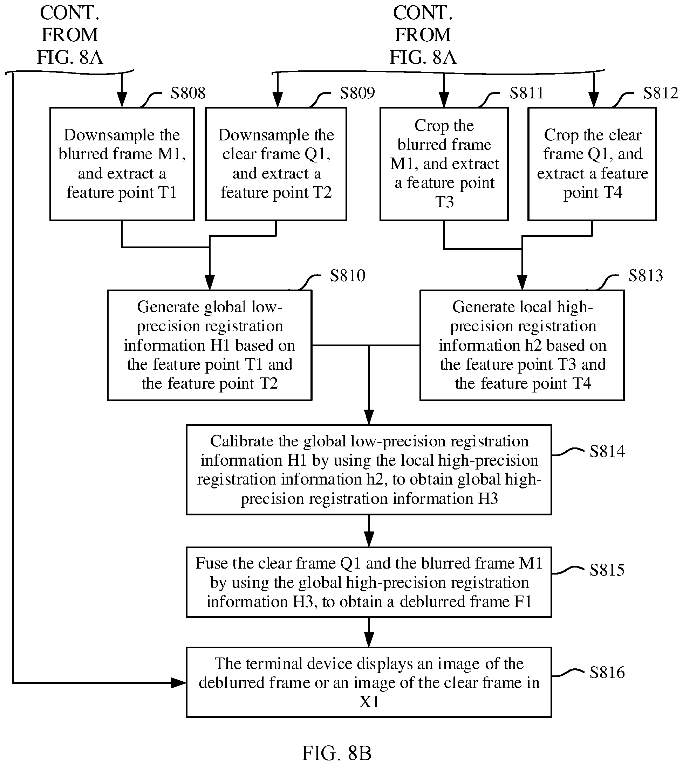

FIG. 8A and FIG. 8B are a schematic flowchart of an image processing method according to an embodiment of this application.

S801: In response to an operation A of starting image shooting by a user, a terminal device starts a camera A not equipped with OIS.

It may be understood that the operation A may be tapping a photo shooting control, or may be tapping a video recording control, or may be another combination operation that can trigger starting shooting, or the like. This is not limited herein. The photo shooting control or the video recording control may be a control in preset software of the terminal device before delivery, or may be a control in third-party software. This is not limited herein.

For example, the user wants to shoot an external scene. Therefore, the user may open video recording software, tap Start recording as the operation A, and trigger an interrupt device to start the camera A that has a wide-angle lens and is not equipped with the OIS to shoot a surrounding scene.

S802: The terminal device caches, in real time, a five-frame video sequence shot by the camera A, where the five-frame video sequence is denoted as X1.

After the terminal device starts the camera A, the camera A may shoot a video frame, to obtain a video sequence. The terminal device may cache, in real time, the video sequence shot by the camera A.

In this embodiment of this application, an example in which the terminal device caches the five-frame video sequence shot by the camera A is used, and the five-frame video sequence cached in real time is denoted as X1. It may be understood that, in actual application, the terminal device may cache, in real time, a video sequence of more frames or fewer frames shot by the camera A. This is not limited herein.

It should be noted that the terminal device may cache a plurality of frames as a video sequence during video recording or photographing. A difference lies in that if photographing is performed, the terminal device may finally select an optimal frame from the video sequence as a photo.

S803: When detecting that the camera A is started, the terminal device starts a camera B equipped with the OIS.

In this embodiment of this application, when detecting that the camera A not equipped with the OIS is started, the terminal device starts the camera B equipped with the OIS.

Specifically, in some embodiments of this application, the terminal device may first determine whether a started camera is equipped with the OIS, and only when determining that the started camera A is not equipped with the OIS, the terminal device starts the camera B equipped with the OIS.

It may be understood that, in a scenario in which an image shooting environment is harsh, for example, a dark environment or a shaking scenario, the camera B equipped with the OIS may shoot a clearer frame picture than the camera A not equipped with the OIS.

In addition, although the frame picture shot by the camera A may be less clear than the frame picture shot by the camera B, because the camera A has a wide-angle lens, the frame picture shot by the camera A may cover a wider range of scenes and may have a stronger sense of spatial depth. Therefore, the two cameras have different functions to meet user requirements, and the frame picture shot by one camera is not completely replaced by the frame picture shot by the other camera.

In some embodiments of this application, the camera A may also be referred to as a first camera, and the camera B may also be referred to as a second camera. This is not limited herein.

S804: The terminal device caches, in real time, a five-frame video sequence shot by the camera B, where the five-frame video sequence is denoted as X2.

After the terminal device starts the camera B, the camera B may shoot a video frame, to obtain a video sequence. The terminal device may cache, in real time, the video sequence shot by the camera B.

In this embodiment of this application, an example in which the terminal device caches the five-frame video sequence shot by the camera B is used, and the five-frame video sequence cached in real time is denoted as X2. It may be understood that, in actual application, the terminal device may cache, in real time, a video sequence of more frames or fewer frames shot by the camera B. This is not limited herein.

S805: A middle most frame of X1 is used as a current frame D1, and the terminal device determines whether the current frame D1 is a clear frame.

After the terminal device starts a camera to shoot a picture, and caches shot frame pictures to obtain a video sequence, the terminal device displays the frame pictures in the video sequence in a specific time sequence.

For example, for the five-frame video sequence X1 obtained by shooting by the camera A, the terminal device may sequentially display the five frames of pictures in X1 in descending order of shooting times. If a current to-be-displayed frame is referred to as the current frame D1, and it is assumed that the middlemost frame of X1 is the current frame D1, the terminal device may first determine whether the current frame D1 is a clear frame.

It should be noted that, a related method in the conventional technology may be used to determine whether a frame is a blurred frame or a clear frame, for example, determining a change curve of a color level between consecutive pixels, and determining a sharpening degree. Details are not described herein again.

There may be a plurality of specific manners of determining a blurred frame and a clear frame based on a preset condition. Examples are as follows.

In some embodiments, if a first preset condition is a condition set in the terminal device and indicating that a frame is a blurred frame, when the current frame meets the first preset condition, the terminal device may determine that the current frame D1 is a blurred frame. If the current frame does not meet the first preset condition, the terminal device may determine that the current frame D1 is a clear frame.

In some other embodiments, if a second preset condition is a condition set in the terminal device and indicating that a frame is a clear frame, when the current frame meets the second preset condition, the terminal device may determine that the current frame D1 is a clear frame. If the current frame does not meet the second preset condition, the terminal device may determine that the current frame D1 is a blurred frame.

In some other embodiments, if a third preset condition is a condition set in the terminal device and indicating that a frame is a blurred frame, and a fourth preset condition is a condition set in the terminal device and indicating that a frame is a clear frame, when the current frame meets the third preset condition, the terminal device may determine that the current frame D1 is a blurred frame. If the current frame meets the fourth preset condition, the terminal device may determine that the current frame D1 is a clear frame.

It may be understood that there may be more manners of determining whether a frame is a blurred frame or a clear frame by combining various conditions. This is not limited herein.

In this embodiment of this application, when the terminal device determines that the current frame D1 is a clear frame, step S816 may be performed. When the terminal device determines that the current frame D1 is not a clear frame, step S806 may be performed.

In some embodiments, if the terminal device directly determines that the current frame D1 is a blurred frame, step S806 may not be performed, but a subsequent step of step S806 may be directly performed. This is not limited herein.

S806: The terminal device determines that the current frame D1 is a blurred frame, where the blurred frame is denoted as a blurred frame M1.

If the first preset condition is the condition set in the terminal device and indicating that a frame is a blurred frame, when the current frame D1 meets the first preset condition, the terminal device may determine that the current frame D1 is a blurred frame, where the blurred frame may be denoted as the blurred frame M1 in this embodiment of this application.

In this embodiment of this application, after it is determined that a frame is a blurred frame, subsequent steps S807, S808, and S810 may be performed. It may be understood that, the terminal device may synchronously perform these steps based on a computing capability, an execution speed, and the like, or may sequentially perform these steps in a specific sequence, or dynamically adjusts an execution sequence of these steps in real time during execution, or the like. This is not limited herein.

S807: The terminal device selects, from X2, a clear frame Q1 matching the blurred frame M1.

After determining that the current frame D1 is the blurred frame M1, the terminal device may select, from the video sequence X2 shot and cached by the camera B, the clear frame Q1 that matches the blurred frame M1 and that is clear.

In some embodiments, after determining that the current frame D1 is the blurred frame M1, the terminal device may send a clear frame selection identifier to the camera B, and determine, from the camera B, the clear frame Q1 that is matched and clear. The clear frame selection identifier may carry time information, blur degree information, and the like of the blurred frame M1.

In some embodiments, the determined clear frame Q1 may be a frame, in the video sequence X2, whose definition does not exceed a blur degree threshold compared with that of the blurred frame M1, and whose capture time is closest to a capture time of the blurred frame M1, or whose capture time interval with a capture time of the blurred frame M1 is within first preset duration.

A rule of selecting a specific frame in the video sequence X2 as the clear frame Q1 matching the blurred frame M1 may be determined based on an actual requirement, or may be determined with reference to a related rule of selecting a clear frame matching a target frame from a video sequence in the conventional technology. This is not limited herein.

S808: The terminal device downsamples the blurred frame M1, and extracts a feature point T1.

It may be understood that downsampling is also referred to as image reduction, that is, image resolution reduction, which can significantly reduce computing power required for performing related calculation on an image. For example, if a size of an image I is M*N, downsampling is performed on the image I at a ratio of s, to obtain a resolution image with a size of (M/s)*(N/s), where s is generally a common divisor of M and N. For an image in a matrix form, an image in an s*s window of the original image is converted into a pixel, and a value of the pixel is an average value of all pixels in the window.

In some embodiments, a feature point may be a point at which a grayscale value of an image changes greatly or a point at which a curvature is large on an image edge (that is, an intersection point of two edges). An image feature point can play a role in an image matching algorithm based on a feature point. The image feature point can reflect an essential feature of the image, and can identify a target object in the image. Image matching can be completed through feature point matching.

In this embodiment of this application, a first downsampling rate used by the terminal device to downsample the blurred frame M1 may be a preset downsampling rate, or may be a downsampling rate determined based on a current computing capability of the terminal device. This is not limited herein.

It may be understood that, after downsampling is completed on the blurred frame M1, a related feature point extraction method in the conventional technology may be used to extract a feature point from a downsampled image, to obtain the feature point T1. Details are not described herein again.

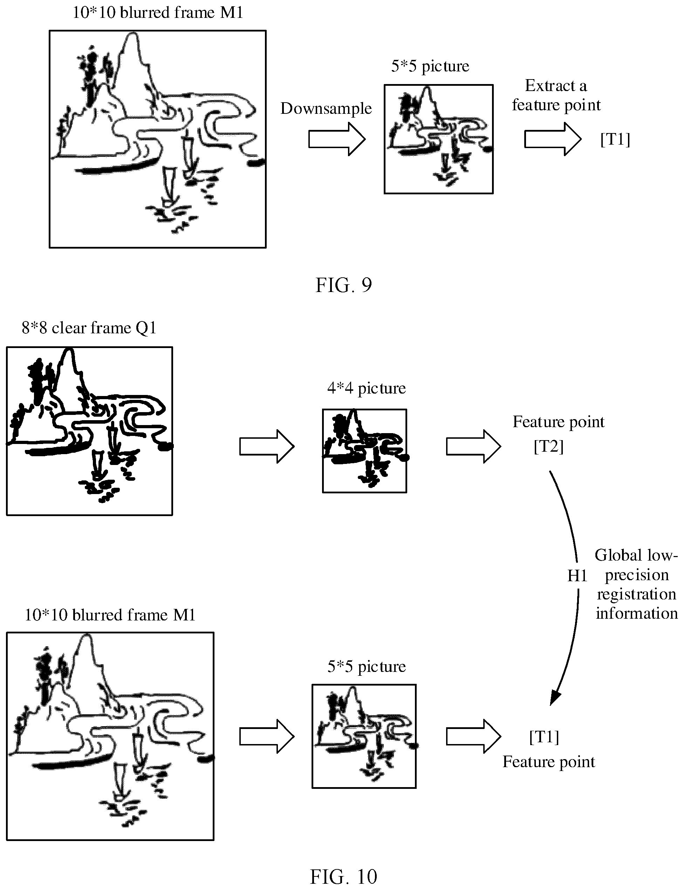

For example, FIG. 9 is a schematic diagram of an example of downsampling a frame and extracting a feature point. 2x downsampling is performed on the blurred frame M1 with a size of 10*10, to obtain a 5*5 picture, and a feature point is extracted from the picture, to obtain a matrix set [T1] describing the feature point of the image.

S809: The terminal device downsamples the clear frame Q1, and extracts a feature point T2.

A manner of performing downsampling and extracting a feature is similar to that in step S808. Details are not described herein again.

It may be understood that in this embodiment of this application, a first downsampling ratio that is the same as that in step S808 is used in step S809.

S810: The terminal device generates global low-precision registration information H1 based on the feature point T1 and the feature point T2.

Image registration is a process of matching and superimposing two or more images obtained in different times, different sensors or different weather conditions. The following manner may be generally used in a registration process: first extracting features of two images to obtain feature points; finding a matched feature point pair through similarity measurement; then obtaining spatial coordinate transformation parameters of the images based on the matched feature point pair; and finally performing image registration based on the coordinate transformation parameters.

In this embodiment of this application, a matrix of spatial coordinate transformation parameters of images for converting a clear frame into a blurred frame is referred to as registration information.

It may be understood that a method for generating low-precision registration information may be the same as a method for generating high-precision registration information. Downsampling is performed on the blurred frame M1 and the clear frame Q1, and only few feature points are extracted. Therefore, generated registration information is referred to as the global low-precision registration information H1.

For example, FIG. 10 is a schematic diagram of an example scenario of generating low-precision registration information. Similarity measurement is performed on the feature point T1 extracted from a 5*5 picture obtained by downsampling the 10*10 blurred frame M1, and the feature point T2 extracted from a 4*4 picture obtained by downsampling the 8*8 clear frame Q1, to find a matched feature point pair, and then the global low-precision registration information H1 for converting the clear frame Q1 into the blurred frame M1 may be obtained through calculation based on the matched feature point pair.

S811: The terminal device crops the blurred frame M1, and extracts a feature point T3.

In this embodiment of this application, cropping a frame indicates that a picture size of the frame is reduced without reducing a resolution of the frame (without losing definition).

Specifically, in some embodiments, the terminal device may crop the blurred frame M1 based on a first area ratio, a first center point location, and a first shape, to obtain a blurred cropping region, and extract a feature point from the blurred cropping region to obtain the feature point T3. The first area ratio is a ratio of an area of the blurred cropping region to a total area of the blurred frame, the first shape is a shape of the blurred cropping region, and the first center point location is a location of a center point of the blurred cropping region relative to a center point of the blurred frame.

In some embodiments, a central region of a frame is cropped, that is, the first center point location is a center point of the frame. It may be understood that, based on an actual situation, another location in a frame picture may alternatively be selected for cropping. This is not limited herein.

In some embodiments, the first area ratio may be a preset ratio, or may be a ratio determined by the terminal device based on a real-time computing capability. This is not limited herein.

In some embodiments, the first shape may be a square or a rectangle. It may be understood that, based on an actual situation, a picture in another shape may alternatively be obtained by cropping. This is not limited herein.

In some embodiments, a frame picture with a 4K resolution may be cropped based on a first area ratio of 1/4. It may be understood that, based on an actual situation, a larger or smaller picture may be obtained by cropping. This is not limited herein.

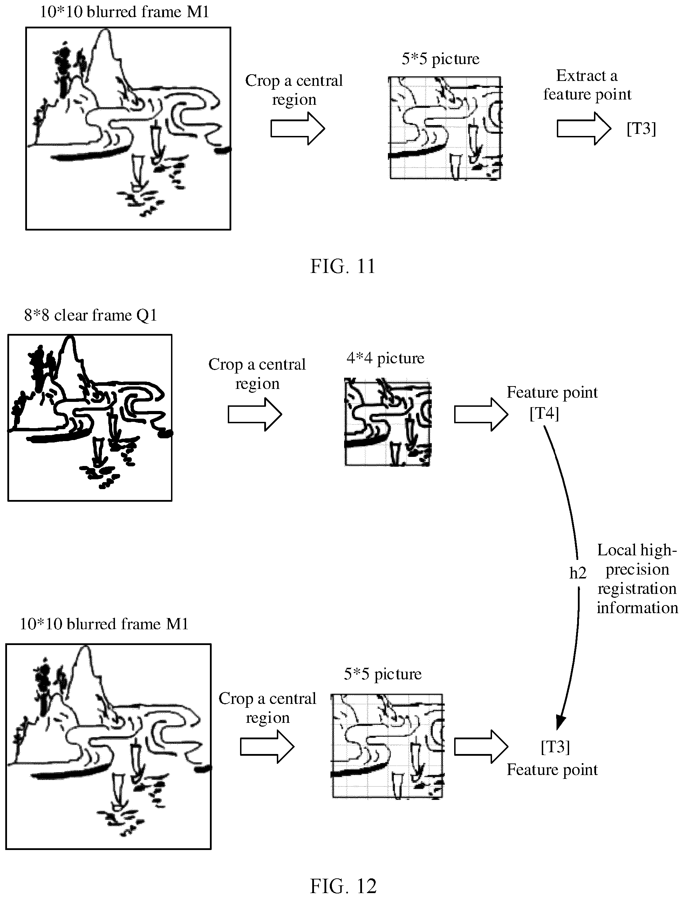

For example, FIG. 11 is a schematic diagram of an example scenario of cropping a frame and extracting a feature point. For the 10*10 blurred frame M1, a picture in a central region of 5*5 may be cropped, and a feature point is extracted from the picture, to obtain a matrix set [T3] describing the feature point of the image.

S812: The terminal device crops the clear frame Q1, and extracts a feature point T4.

A manner of performing cropping and extracting a feature is similar to that in step S811. Details are not described herein again.

Specifically, in some embodiments, the terminal device may crop the clear frame Q1 based on a first area ratio, a first center point location, and a first shape, to obtain a clear cropping region, and extract a feature point from the clear cropping region to obtain the feature point T4. The first area ratio is a ratio of an area of the clear cropping region to a total area of the clear frame, the first shape is a shape of the clear cropping region, and the first center point location is a location of a center point of the clear cropping region relative to a center point of the clear frame.

It may be understood that in this embodiment of this application, the first area ratio, the first center point location, and the first shape in step S812 are the same as those in step S812.

It should be noted that the feature point T1, the feature point T2, the feature point T3, and the feature point T4 in this embodiment of this application may all be feature point sets.

S813: The terminal device generates local high-precision registration information h2 based on the feature point T3 and the feature point T4.

Based on the feature points T3 and T4, the terminal device may generate the registration information h2 for converting an image space of a picture obtained by cropping the clear frame Q1 into an image space of a picture obtained by cropping the blurred frame M1.

For example, FIG. 12 is a schematic diagram of an example scenario of generating local high-precision registration information. Similarity measurement is performed on the feature point T3 extracted from a 5*5 picture obtained by cropping a central region of the 10*10 blurred frame M1, and the feature point T4 extracted from a 4*4 picture obtained by cropping a central region of the 8*8 clear frame Q1, to find a matched feature point pair, and then the local high-precision registration information h2 for converting a picture cropped from the clear frame Q1 into a picture cropped from the blurred frame M1 may be obtained through calculation based on the matched feature point pair.

S814: The terminal device calibrates the global low-precision registration information H1 by using the local high-precision registration information h2, to obtain global high-precision registration information H3.

The terminal device may calibrate the global low-precision registration information H1 by using the local high-precision registration information h2, to improve precision of the global low-precision registration information, so as to obtain the global high-precision registration information H3.

It may be understood that there may be a plurality of specific manners of calibrating H1 by using h2 to obtain H3. The following describes one of the manners as an example.

The registration information H1, h1, and H3 are matrices formed by registration information of each of a plurality of pictures in the entire picture. Registration information of an $i^{th}$ picture in H1 is denoted as $H_i$; registration information of the $i^{th}$ picture in h2 is denoted as $h_i$; registration information of a $j^{th}$ picture around the $H_i$ is denoted as $H_j$; a weight of the $i^{th}$ block of registration information is denoted as $\omega_i$; a spatial consistency hyperparameter is denoted as $\lambda$; and H3 is denoted as $\{\hat{H_i}\}$. By using the following formula 1, a value of $h_i$ is close to $H_i$, and a value of $H_j$ is close to a value of the surrounding $H_i$, so that $\{\hat{H_i}\}$ may be obtained as follows:

$$\{\hat{H}_i\}=\arg\min\sum_i(\omega_i|\,|H_i-h_i|\,|^2+\lambda\sum_j(|\,|H_i-H_j|\,|^2)\quad \text{Formula 1}$$

S815: The terminal device fuses the clear frame Q1 and the blurred frame M1 by using the global high-precision registration information H3, to obtain a deblurred frame F1.

After obtaining the global high-precision registration information H3, the terminal device may use the H3 to fuse the clear frame Q1 into the blurred frame M1, to obtain the deblurred frame F1.

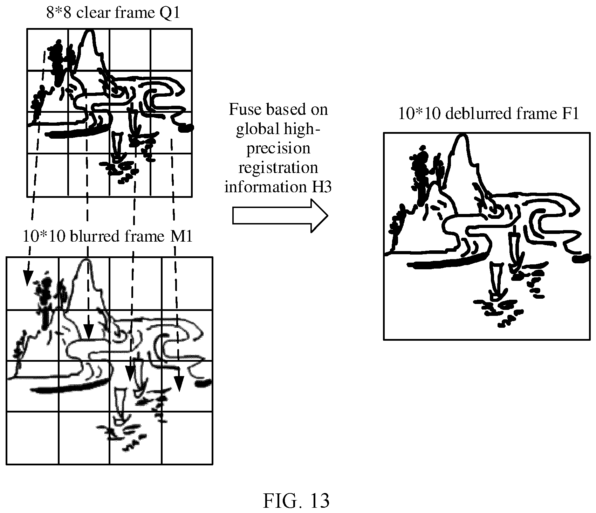

For example, FIG. 13 is a schematic diagram of an example scenario of fusing the clear frame Q1 into the blurred frame M1. Based on the global high-precision registration information H3, each image block in the clear frame Q1 can be transformed to a corresponding location in the blurred frame M1, and fused into the blurred frame M1, to obtain the deblurred frame F1.

S816: The terminal device displays an image of the deblurred frame or an image of the clear frame in X1.

When the terminal device determines that the current frame in X1 is a clear frame in step S805, or when the terminal device determines that the current frame in X1 is a blurred frame in step S805, after the blurred frame is subsequently processed as a deblurred frame, the terminal device can display an image of the deblurred frame or an image of the clear frame in X1.

In this embodiment of this application, when a camera that starts image shooting is not equipped with OIS, the terminal device may also start a camera equipped with the OIS, and perform, by using a clear frame shot by the camera equipped with the OIS, deblurring processing on a blurred frame shot by the camera not equipped with the OIS. In this way, a deblurring effect of the terminal device on the blurred frame can be better, and definition consistency of pictures displayed by the terminal device is higher. In addition, when performing deblurring processing, the terminal device extracts a feature point after separately downsampling the clear frame and the blurred frame, to obtain the global low-precision registration information through matching, extracts a feature point after separately cropping the clear frame and the blurred frame, to obtain the local high-precision registration information through matching, and then obtains, by calibrating the global low-precision registration information by using the local high-precision registration information, the global high-precision registration information required for performing deblurring processing. This greatly reduces computing power required for performing image registration, so that even the terminal device is a mobile terminal device, real-time deblurring processing may also be implemented. In this way, definition consistency of images shot by the mobile terminal device is higher.

The following uses another application scenario as an example to specifically describe the image processing method in embodiments of this application.

Application scenario 2: A terminal device includes a camera C, and the camera C is equipped with OIS; or the camera C is not equipped with OIS, and the terminal device does not have a camera equipped with the OIS. A user starts the camera C to perform image shooting.

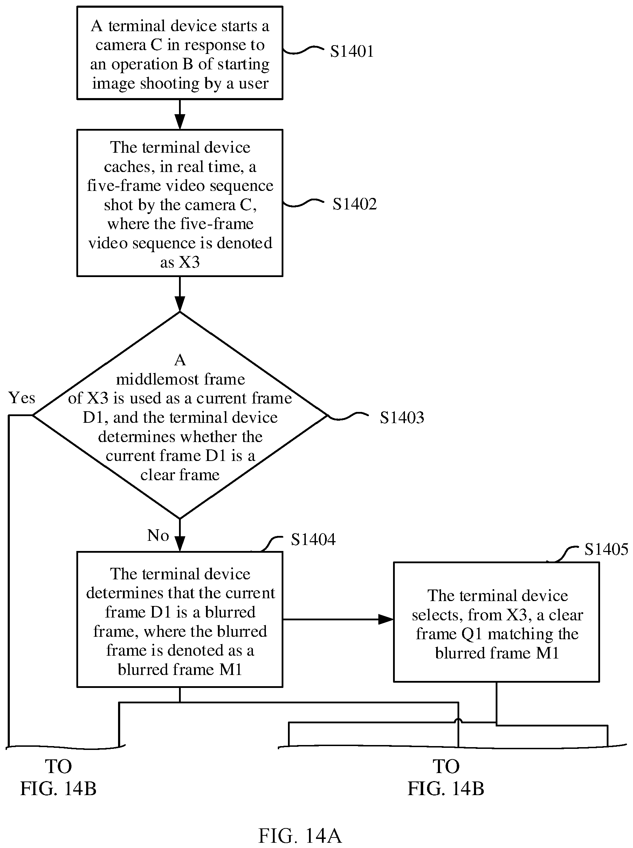

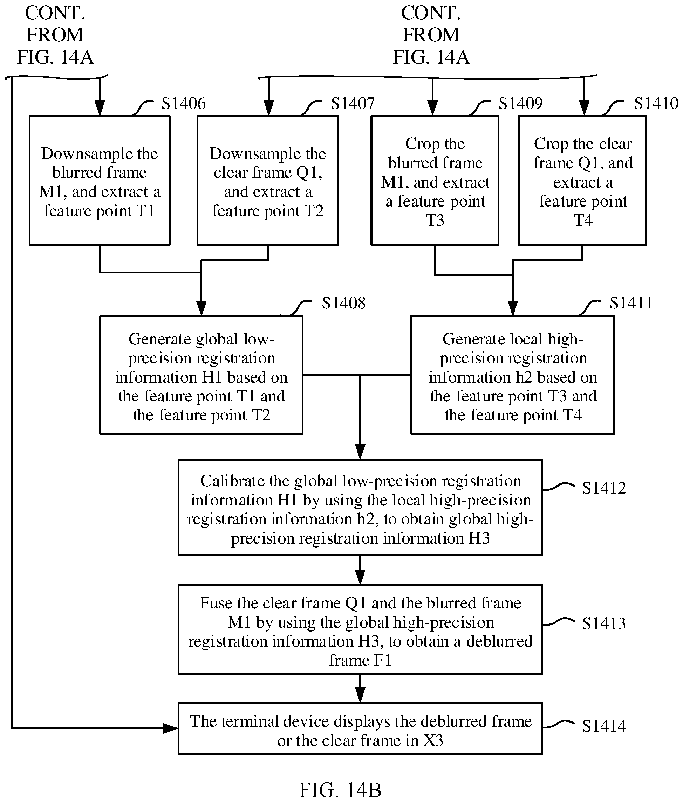

FIG. 14A and FIG. 14B are a schematic flowchart of another image processing method according to an embodiment of this application.

S1401: A terminal device starts a camera C in response to an operation B of starting image shooting by a user.

In some embodiments of this application, the camera C may also be referred to as a second camera. This is not limited herein.

S1402: The terminal device caches, in real time, a five-frame video sequence shot by the camera C, where the five-frame video sequence is denoted as X3.

Steps S1401 and S1402 are similar to steps S801 and S802. Details are not described herein again.

S1403: A middlemost frame of X3 is used as a current frame D1, and the terminal device determines whether the current frame D1 is a clear frame.

S1404: The terminal device determines that the current frame D1 is a blurred frame, where the blurred frame is denoted as a blurred frame M1.

Steps S1403 and S1404 are similar to steps S805 and S806. Details are not described herein again.

S1405: The terminal device selects, from X3, a clear frame Q1 matching the blurred frame M1.

After determining that the current frame D1 is the blurred frame M1, the terminal device may select, from the video sequence X3 shot and cached by the camera C, the clear frame Q1 that matches the blurred frame M1 and that is clear.

In some embodiments, the determined clear frame Q1 may be a frame, in the video sequence X3, whose definition does not exceed a blur degree threshold compared with that of the blurred frame M1, and whose time is closest to a capture time of the blurred frame M1.

In some embodiments, the determined clear frame Q1 may be a frame, in the video sequence X3, whose definition does not exceed a blur degree threshold compared with that of the blurred frame M1, and whose capture time interval with a capture time of the blurred frame M1 is within first preset duration.

A rule of selecting a specific frame in the video sequence X3 as the clear frame Q1 matching the blurred frame M1 may be determined based on an actual requirement, or may be determined with reference to a related rule of selecting a clear frame matching a target frame from a video sequence in the conventional technology. This is not limited herein.

In some embodiments, regardless of whether the camera C is equipped with the OIS, steps S1401 to S1405 may be performed sequentially.

S1406: The terminal device downsamples the blurred frame M1, and extracts a feature point T1.

S1407: The terminal device downsamples the clear frame Q1, and extracts a feature point T2.

S 1408: The terminal device generates global low-precision registration information H1 based on the feature point T1 and the feature point T2.

S1409: The terminal device crops the blurred frame M1, and extracts a feature point T3.

S1410: The terminal device crops the clear frame Q1, and extracts a feature point T4.

S 1411: The terminal device generates local high-precision registration information h2 based on the feature point T3 and the feature point T4.

S 1412: The terminal device calibrates the global low-precision registration information H1 by using the local high-precision registration information h2, to obtain global high-precision registration information H3.

S 1413: The terminal device fuses the clear frame Q1 and the blurred frame M1 by using the global high-precision registration information H3, to obtain a deblurred frame F1.

S1414: The terminal device displays an image of the deblurred frame or an image of the clear frame in X3.

Steps S1406 to S1414 are similar to steps S808 to S816. For details, refer to the descriptions of steps S808 to S816. Details are not described herein again.

In this embodiment of this application, the terminal device may perform deblurring processing on a blurred frame based on a frame picture in a video sequence shot by one camera, so that definition consistency of pictures displayed by the terminal device is higher. In addition, when performing deblurring processing, the terminal device extracts a feature point after separately downsampling the clear frame and the blurred frame, to obtain the global low-precision registration information through matching, extracts a feature point after separately cropping the clear frame and the blurred frame, to obtain the local high-precision registration information through matching, and then obtains, by calibrating the global low-precision registration information by using the local high-precision registration information, the global high-precision registration information required for performing deblurring processing. This greatly reduces computing power required for performing image registration, so that even the terminal device is a mobile terminal device, real-time deblurring processing may also be implemented. In this way, definition consistency of images shot by the mobile terminal device is higher.

In some embodiments of this application, the image processing methods in embodiments shown in FIG. 8A and FIG. 8B and FIG. 14A and FIG. 14B may also be used together. For example, the terminal device may determine whether a started camera is equipped with OIS. When it is determined that the started camera is equipped with the OIS, for example, the camera A is started, the terminal device may perform the image processing method according to the embodiment shown in FIG. 8A and FIG. 8B. When it is determined that the started camera A is not equipped with the OIS, the camera B equipped with the OIS is started. When it is determined that the started camera is not equipped with the OIS, for example, the camera C not equipped with the OIS is started, the terminal device may perform the image processing method according to the embodiment shown in FIG. 14A and FIG. 14B. When it is determined that the started camera C is not equipped with the OIS, and a frame captured by the camera C is a blurred frame, a clear frame that matches the blurred frame and that is clear is determined from frames captured by the camera C. It may be understood that there may be another manner of combining the image processing methods in embodiments shown in FIG. 8A and FIG. 8B and FIG. 14A and FIG. 14B. This is not limited herein.

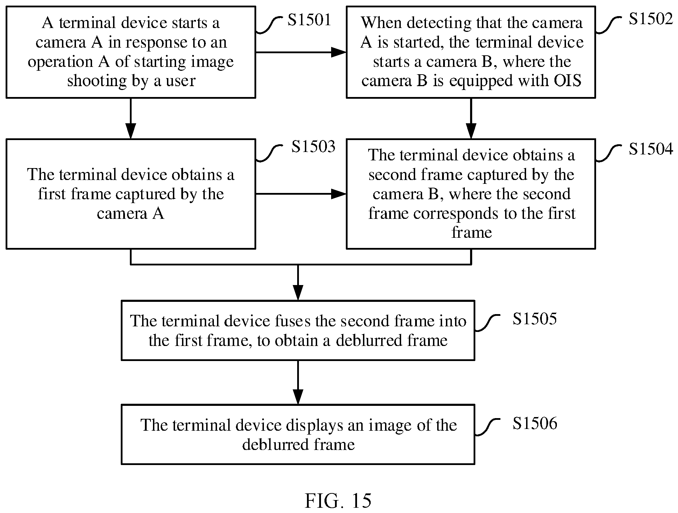

With reference to embodiments shown in FIG. 8A and FIG. 8B and FIG. 14A and FIG. 14B, as shown in FIG. 15, an embodiment of this application further provides still another image processing method.

S1501: A terminal device starts a camera A in response to an operation A of starting image shooting by a user.

S1502: When detecting that the camera A is started, the terminal device starts a camera B, where the camera B is equipped with OIS.

In some embodiments of this application, when detecting that the camera A is started, the terminal device may directly start the camera B.

In some embodiments of this application, after detecting that the camera A is started, the terminal device may determine whether the camera A is equipped with the OIS, and start the camera B if the camera A is equipped with the OIS.

S1503 : The terminal device obtains a first frame captured by the camera A.

In some embodiments of this application, the terminal device performs subsequent steps only when determining that the first frame is a blurred frame.

S1504: The terminal device obtains a second frame captured by the camera B, where the second frame corresponds to the first frame.

In some embodiments of this application, the terminal device may determine whether a frame captured by the camera B is a clear frame, and use the clear frame as the second frame corresponding to the first frame only when the captured frame is the clear frame.

For steps S1501 to S1503, refer to descriptions in steps S801 to S807. Details are not described herein again.

S1505: The terminal device fuses the second frame into the first frame, to obtain a deblurred frame.

In some embodiments of this application, the terminal device may first determine registration information for converting the second frame into the second frame, and then fuse the second frame into the first frame based on the registration information, to obtain the deblurred frame.

Specifically, the terminal device obtains registration information H4 in a plurality of manners.

In some embodiments, registration may be directly performed on the second frame and the first frame, to obtain the registration information H4.

In some embodiments, downsampling may be first performed on the second frame and the first frame, and then registration is performed, to obtain the registration information H4.

In some embodiments, registration may be performed based on the foregoing steps S808 to S814.

Registration may alternatively be performed in more other manners, to obtain the registration information H4. This is not limited herein.

S1506: The terminal device displays an image of the deblurred frame.

For details, refer to the steps S815 and S816. Details are not described herein.

In this embodiment of this application, when the terminal device starts the camera A to perform image shooting, the terminal device may also start the camera B equipped with the OIS, and perform, by using the clear frame captured by the camera B equipped with the OIS, deblurring processing on the blurred frame captured by the camera A. In this way, a deblurring effect of the terminal device on the blurred frame is better, so that definition consistency of pictures displayed by the terminal device is higher.

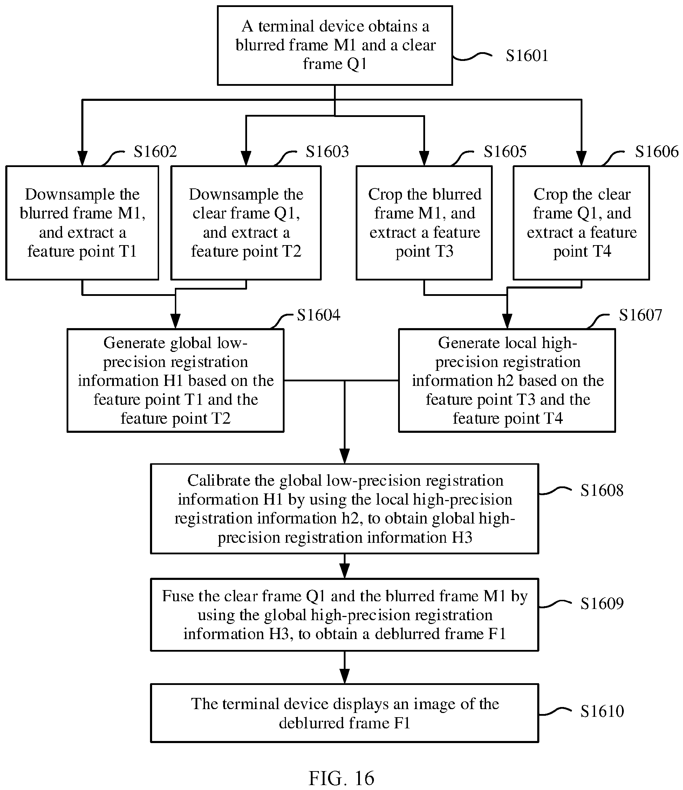

With reference to embodiments shown in FIG. 8A and FIG. 8B and FIG. 14A and FIG. 14B, as shown in FIG. 16, an embodiment of this application further provides yet another image processing method.

S1601: A terminal device obtains a blurred frame M1 and a clear frame Q1.

In this embodiment of this application, there may be a plurality of sources of the blurred frame M1 and the clear frame Q1.

In some embodiments, the terminal device may obtain the blurred frame M1 and the clear frame Q1 based on steps S801 to S807.

In some embodiments, the terminal device may obtain the blurred frame M1 and the clear frame Q1 based on steps S1401 to S1405.

In some embodiments, the blurred frame M1 and the clear frame Q1 may be specified by a user.

In some embodiments, the blurred frame M1 and the clear frame Q1 may be obtained by the terminal device from a user album according to a default rule.

There may alternatively be a plurality of manners of obtaining the blurred frame M1 and the clear frame Q1. These are not limited herein.

S1602: The terminal device downsamples the blurred frame M1, and extracts a feature point T1.

S1603: The terminal device downsamples the clear frame Q1, and extracts a feature point T2.

S1604: The terminal device generates global low-precision registration information H1 based on the feature point T1 and the feature point T2.

S1605: The terminal device crops the blurred frame M1, and extracts a feature point T3.

S1606: The terminal device crops the clear frame Q1, and extracts a feature point T4.

S1607: The terminal device generates local high-precision registration information h2 based on the feature point T3 and the feature point T4.

S1608: The terminal device calibrates the global low-precision registration information H1 by using the local high-precision registration information h2, to obtain global high-precision registration information H3.

S1609: The terminal device fuses the clear frame Q1 and the blurred frame M1 by using the global high-precision registration information H3, to obtain a deblurred frame F1.

S1610: The terminal device displays an image of the deblurred frame F1.

Steps S1602 to S1610 are similar to steps S808 to S816. For details, refer to the descriptions of steps S808 to S816. Details are not described herein again.

In this embodiment of this application, when performing deblurring processing, the terminal device extracts a feature point after separately downsampling the clear frame and the blurred frame, to obtain the global low-precision registration information through matching, extracts a feature point after separately cropping the clear frame and the blurred frame, to obtain the local high-precision registration information through matching, and then obtains, by calibrating the global low-precision registration information by using the local high-precision registration information, the global high-precision registration information required for performing deblurring processing. This greatly reduces computing power required for performing image registration, so that even the terminal device is a mobile terminal device, real-time deblurring processing may also be implemented. In this way, definition consistency of images shot by the mobile terminal device is higher.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used for implementation, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1.  An image processing method, comprising:

    starting, by a terminal device, a first camera in response to a first operation of a user;
    starting, by the terminal device, a second camera when detecting that the first camera is started, wherein the second camera is equipped with OIS optical image stabilization;
    obtaining, by the terminal device, a first frame captured by the first camera;
    obtaining, by the terminal device, a second frame captured by the second camera, wherein the second frame corresponds to the first frame;
    fusing, by the terminal device, the second frame into the first frame, to obtain a deblurred frame; and
    displaying, by the terminal device, an image of the deblurred frame.

2.  The method according to claim 1, wherein before the obtaining, by the terminal device, a second frame captured by the second camera, the method further comprises:

    determining, by the terminal device, that the first frame is a blurred frame; and
    before the fusing, by the terminal device, the second frame into the first frame, to obtain a deblurred frame, the method further comprises:
    determining, by the terminal device, that the second frame is a clear frame.

3.  The method according to claim 1, wherein before the starting, by the terminal device, a second camera, the method further comprises:

    determining, by the terminal device, whether the first camera is equipped with the OIS; and

if the first camera is not equipped with the OIS, starting the second camera.

4. The method according to any one of claims 1 to 3, wherein the fusing, by the terminal device, the second frame into the first frame, to obtain a deblurred frame specifically comprises:

determining, by the terminal device, registration information for converting the second frame into the first frame; and

fusing, by the terminal device, the second frame into the first frame based on the registration information, to obtain the deblurred frame.

5. The method according to claim 4, wherein the determining, by the terminal device, registration information for converting the second frame into the first frame specifically comprises:

generating, by the terminal device, global low-precision registration information based on a feature point extracted after downsampling is performed on the first frame and the second frame;

generating, by the terminal device, local high-precision registration information based on a feature point extracted after cropping is performed on the first frame and the second frame; and

calibrating, by the terminal device, the global low-precision registration information by using the local high-precision registration information, to obtain global high-precision registration information, wherein the global high-precision registration information is used as the registration information for converting the second frame into the first frame.

6. The method according to claim 5, wherein the generating, by the terminal device, global low-precision registration information based on a feature point extracted after downsampling is performed on the first frame and the second frame specifically comprises:

extracting, by the terminal device, a feature point after downsampling the first frame based on a first downsampling ratio, to obtain a first feature point set;

extracting, by the terminal device, a feature point after downsampling the second frame based on the first downsampling ratio, to obtain a second feature point set; and

generating, by the terminal device based on the first feature point set and the second feature point set, the global low-precision registration information for converting the second frame into the first frame.

7. The method according to claim 5, wherein the generating, by the terminal device, local high-precision registration information based on a feature point extracted after cropping is performed on the first frame and the second frame specifically comprises:

cropping, by the terminal device, the first frame based on a first area ratio, a first center point location, and a first shape, to obtain a first cropping region, and extracting a feature point from the first cropping region to obtain a third feature point set, wherein the first area ratio is a ratio of an area of the first cropping region to a total area of the first frame, the first shape is a shape of the first cropping region, and the first center point location is a location of a center point of the first cropping region relative to a center point of the first frame;

cropping, by the terminal device, the second frame based on the first area ratio, the first center point location, and the first shape, to obtain a second cropping region, and extracting a feature point from the second cropping region to obtain a fourth feature point set; and

generating, by the terminal device based on the third feature point set and the fourth feature point set, the local high-precision registration information for converting the second cropping region into the first cropping region.

8. The method according to claim 6, wherein the first downsampling ratio is a preset downsampling ratio; or the first downsampling ratio is a downsampling ratio determined by the terminal device based on a real-time computing capability.

9. The method according to claim 7, wherein the first area ratio is a preset ratio; or the first area ratio is a ratio determined by the terminal device based on a real-time computing capability.

10. The method according to claim 7, wherein the first center point location is a center point of a frame.

11. The method according to claim 7, wherein the first shape is a rectangle or a square.

**12.** The method according to any one of claims 1 to 11, wherein the obtaining, by the terminal device, a second frame captured by the second camera specifically comprises:

sending, by the terminal device, a clear frame selection identifier to the second camera, wherein the clear frame selection identifier comprises time information and blur degree information of the first frame; and
receiving, by the terminal device, the second frame that corresponds to the first frame and that is fed back by the second camera.

**13.** The method according to any one of claims 1 to 12, wherein the second frame is a frame, in frames captured by the second camera, whose capture time interval with the first frame is within first preset duration, and whose blur degree does not exceed a preset blur threshold compared with a blur degree of the first frame.

**14.** A terminal device, wherein the terminal device comprises one or more processors, a memory, a first camera, a second camera, and a display; and
the memory is coupled to the one or more processors, the memory is configured to store computer program code, the computer program code comprises computer instructions, and the one or more processors invoke the computer instructions, so that the terminal device performs the following operations:

starting the first camera in response to a first operation of a user;
starting the second camera when detecting that the first camera is started, wherein the second camera is equipped with OIS;
obtaining a first frame captured by the first camera;
obtaining a second frame captured by the second camera, wherein the second frame corresponds to the first frame;
fusing the second frame into the first frame, to obtain a deblurred frame; and
displaying an image of the deblurred frame.

**15.** The terminal device according to claim 14, wherein the one or more processors are further configured to invoke the computer instructions, so that the terminal device performs the following operations:

determining that the first frame is a blurred frame; and
determining that the second frame is a clear frame.

**16.** The terminal device according to claim 14, wherein the one or more processors are further configured to invoke the computer instructions, so that the terminal device performs the following operations:

determining whether the first camera is equipped with the OIS; and
if the first camera is not equipped with the OIS, starting the second camera.

**17.** The terminal device according to any one of claims 14 to 16, wherein the one or more processors are specifically configured to invoke the computer instructions, so that the terminal device performs the following operations:

determining registration information for converting the second frame into the first frame; and
fusing the second frame into the first frame based on the registration information, to obtain the deblurred frame.

**18.** The terminal device according to claim 17, wherein the one or more processors are specifically configured to invoke the computer instructions, so that the terminal device performs the following operations:

generating global low-precision registration information based on a feature point extracted after downsampling is performed on the first frame and the second frame;
generating local high-precision registration information based on a feature point extracted after cropping is performed on the first frame and the second frame; and
calibrating the global low-precision registration information by using the local high-precision registration information, to obtain global high-precision registration information, wherein the global high-precision registration information is used as the registration information for converting the second frame into the first frame.

**19.** The terminal device according to claim 18, wherein the one or more processors are specifically configured to invoke the computer instructions, so that the terminal device performs the following operations:

extracting a feature point after downsampling the first frame based on a first downsampling ratio, to obtain a first feature point set;

extracting a feature point after downsampling the second frame based on the first downsampling ratio, to obtain a second feature point set; and

generating, based on the first feature point set and the second feature point set, the global low-precision registration information for converting the second frame into the first frame.

20. The terminal device according to claim 18, wherein the one or more processors are specifically configured to invoke the computer instructions, so that the terminal device performs the following operations:

cropping the first frame based on a first area ratio, a first center point location, and a first shape, to obtain a first cropping region, and extracting a feature point from the first cropping region to obtain a third feature point set, wherein the first area ratio is a ratio of an area of the first cropping region to a total area of the first frame, the first shape is a shape of the first cropping region, and the first center point location is a location of a center point of the first cropping region relative to a center point of the first frame;

cropping the second frame based on the first area ratio, the first center point location, and the first shape, to obtain a second cropping region, and extracting a feature point from the second cropping region to obtain a fourth feature point set; and

generating, based on the third feature point set and the fourth feature point set, the local high-precision registration information for converting the second cropping region into the first cropping region.

21. The terminal device according to claim 19, wherein the first downsampling ratio is a preset downsampling ratio; or the first downsampling ratio is a downsampling ratio determined by the terminal device based on a real-time computing capability.

22. The terminal device according to claim 20, wherein the first area ratio is a preset ratio; or the first area ratio is a ratio determined by the terminal device based on a real-time computing capability.

23. The terminal device according to claim 20, wherein the first center point location is a center point of a frame.

24. The terminal device according to claim 20, wherein the first shape is a rectangle or a square.

25. The terminal device according to any one of claims 14 to 24, wherein the one or more processors are specifically configured to invoke the computer instructions, so that the terminal device performs the following operations:

sending a clear frame selection identifier to the second camera, wherein the clear frame selection identifier comprises time information and blur degree information of the first frame; and

receiving the second frame that corresponds to the first frame and that is fed back by the second camera.

26. The terminal device according to any one of claims 14 to 25, wherein the second frame is a frame, in frames captured by the second camera, whose capture time interval with the first frame is within first preset duration, and whose blur degree does not exceed a preset blur threshold compared with a blur degree of the first frame.

27. A chip system, wherein the chip system is applied to a terminal device, the chip system comprises one or more processors, and the processor is configured to invoke computer instructions, so that the terminal device performs the method according to any one of claims 1 to 13.

28. A computer program product comprising instructions, wherein when the computer program product runs on a terminal device, the terminal device is enabled to perform the method according to any one of claims 1 to 13.

29. A computer-readable storage medium, comprising instructions, wherein when the instructions are run on a terminal device, the terminal device is enabled to perform the method according to any one of claims 1 to 13.

FIG. 1

```
┌─────────────────────────┐
│   Start image shooting   │
└─────────────────────────┘
            │
            ▼
┌─────────────────────────┐                    ┌─────────────────────────┐
│  A started camera is not │ ─────────────────► │   A camera equipped      │
│    equipped with OIS     │                    │  with the OIS is started  │
└─────────────────────────┘                    └─────────────────────────┘
            │                                               │
            │         ┌─────────────────────────┐           │
            └───────► │  Blurred frame detection  │ ◄─────────┘
                      └─────────────────────────┘
                                   │
┌─────────────────────────┐       │        ┌─────────────────────────┐
│      Blurred frame       │ ◄────┴──────► │   Best-matched clear      │
│                          │               │         frame             │
└─────────────────────────┘               └─────────────────────────┘
            │                                           │
            │         ┌─────────────────────────┐       │
            └───────► │      Registration         │ ◄─────┘
                      └─────────────────────────┘
                                   │
                                   ▼
                      ┌─────────────────────────┐
                      │         Fusion           │
                      └─────────────────────────┘
                                   │
                                   ▼
                      ┌─────────────────────────┐
                      │     Deblurred frame       │
                      └─────────────────────────┘
```

FIG. 2

To-be-deblurred frame

Clear frame 1

Clear frame 2 that is clearer
than the clear frame 1

Deblurred frame 1

Deblurred frame 2 that is clearer
than the deblurred frame 1

FIG. 3

Image captured by a camera
not equipped with OIS

Image captured by a camera
equipped with the OIS

FIG. 4

FIG. 5

FIG. 6

Terminal device 100

FIG. 7

In response to an operation A of starting image shooting by a user, a terminal device starts a camera A not equipped with OIS ⟋ S801

When detecting that the camera A is started, the terminal device starts a camera B equipped with the OIS ⟋ S803

The terminal device caches, in real time, a five-frame video sequence shot by the camera A, where the five-frame video sequence is denoted as X1 ⟋ S802

The terminal device caches, in real time, a five-frame video sequence shot by the camera B, where the five-frame video sequence is denoted as X2 ⟋ S804

A middlemost frame of X1 is used as a current frame D1, and the terminal device determines whether the current frame D1 is a clear frame ⟋ S805

Yes

No

The terminal device determines that the current frame D1 is a blurred frame, where the blurred frame is denoted as a blurred frame M1 ⟋ S806

The terminal device selects, from X2, a clear frame Q1 matching the blurred frame M1 ⟋ S807

TO
FIG. 8B

TO
FIG. 8B

FIG. 8A

CONT.
FROM
FIG. 8A

CONT.
FROM
FIG. 8A

S808

Downsample the
blurred frame M1,
and extract a
feature point T1

S809

Downsample the
clear frame Q1,
and extract a
feature point T2

S811

Crop the
blurred frame
M1, and extract
a feature point
T3

S812

Crop the clear
frame Q1, and
extract a feature
point T4

S810

Generate global low-
precision registration
information H1 based on
the feature point T1 and
the feature point T2

S813

Generate local high-
precision registration
information h2 based on
the feature point T3 and
the feature point T4

Calibrate the global low-precision registration
information H1 by using the local high-precision
registration information h2, to obtain global high-
precision registration information H3

S814

Fuse the clear frame Q1 and the blurred frame M1
by using the global high-precision registration
information H3, to obtain a deblurred frame F1

S815

The terminal device displays an image of the
deblurred frame or an image of the clear frame in
X1

S816

FIG. 8B

10*10 blurred frame M1

5*5 picture

Downsample

Extract a
feature point

[T1]

FIG. 9

8*8 clear frame Q1

4*4 picture

Feature point
[T2]

H1

Global low-
precision
registration
information

10*10 blurred frame M1

5*5 picture

[T1]
Feature point

FIG. 10

10*10 blurred frame M1

Crop a central region ➡

5*5 picture

Extract a feature point ➡ [T3]

FIG. 11

8*8 clear frame Q1

Crop a central region ➡

4*4 picture

➡ Feature point [T4]

h2 Local high-precision registration information

10*10 blurred frame M1

Crop a central region ➡

5*5 picture

➡ [T3] Feature point

FIG. 12

8*8 clear frame Q1

10*10 blurred frame M1

Fuse based on
global high-
precision
registration
information H3

10*10 deblurred frame F1

FIG. 13

A terminal device starts a camera C in response to an operation B of starting image shooting by a user — S1401

The terminal device caches, in real time, a five-frame video sequence shot by the camera C, where the five-frame video sequence is denoted as X3 — S1402

A middlemost frame of X3 is used as a current frame D1, and the terminal device determines whether the current frame D1 is a clear frame — S1403

Yes

No

The terminal device determines that the current frame D1 is a blurred frame, where the blurred frame is denoted as a blurred frame M1 — S1404

The terminal device selects, from X3, a clear frame Q1 matching the blurred frame M1 — S1405

TO FIG. 14B

TO FIG. 14B

FIG. 14A

CONT.
FROM
FIG. 14A

CONT.
FROM
FIG. 14A

**S1406**

Downsample the blurred frame M1, and extract a feature point T1

**S1407**

Downsample the clear frame Q1, and extract a feature point T2

**S1409**

Crop the blurred frame M1, and extract a feature point T3

**S1410**

Crop the clear frame Q1, and extract a feature point T4

**S1408**

Generate global low-precision registration information H1 based on the feature point T1 and the feature point T2

**S1411**

Generate local high-precision registration information h2 based on the feature point T3 and the feature point T4

**S1412**

Calibrate the global low-precision registration information H1 by using the local high-precision registration information h2, to obtain global high-precision registration information H3

**S1413**

Fuse the clear frame Q1 and the blurred frame M1 by using the global high-precision registration information H3, to obtain a deblurred frame F1

**S1414**

The terminal device displays the deblurred frame or the clear frame in X3

FIG. 14B

A terminal device starts a camera A in response to an operation A of starting image shooting by a user — S1501

When detecting that the camera A is started, the terminal device starts a camera B, where the camera B is equipped with OIS — S1502

The terminal device obtains a first frame captured by the camera A — S1503

The terminal device obtains a second frame captured by the camera B, where the second frame corresponds to the first frame — S1504

The terminal device fuses the second frame into the first frame, to obtain a deblurred frame — S1505

The terminal device displays an image of the deblurred frame — S1506

FIG. 15

```
A terminal device obtains a
blurred frame M1 and a clear          S1601
frame Q1
```

```
S1602                  S1603                    S1605                  S1606

Downsample the      Downsample the      Crop the blurred      Crop the clear
blurred frame M1,   clear frame Q1,     frame M1, and         frame Q1, and
and extract a       and extract a       extract a feature     extract a feature
feature point T1    feature point T2    point T3              point T4
```

```
S1604                                           S1607

Generate global low-                    Generate local high-
precision registration                  precision registration
information H1 based on the             information h2 based on the
feature point T1 and the                feature point T3 and the
feature point T2                        feature point T4
```

```
Calibrate the global low-precision registration
information H1 by using the local high-precision      S1608
registration information h2, to obtain global high-
precision registration information H3
```

```
Fuse the clear frame Q1 and the blurred frame M1 by
using the global high-precision registration            S1609
information H3, to obtain a deblurred frame F1
```

```
The terminal device displays an image of the     S1610
deblurred frame F1
```

FIG. 16

## INTERNATIONAL SEARCH REPORT

| | International application No. |
| --- | --- |
| | **PCT/CN2022/085763** |

| **A.** | **CLASSIFICATION OF SUBJECT MATTER** |
| --- | --- |
| | H04N 5/232(2006.01)i; H04N 5/225(2006.01)i |

According to International Patent Classification (IPC) or to both national classification and IPC

| **B.** | **FIELDS SEARCHED** |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: OIS, 光学图像稳定, 光学防抖, 帧, 图像, 融合, 合并, 组合, 合成, 模糊, optical image stabilization, frame, image, merg+, mix+, combin+, fus+, vague, blur+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 110233970 A (OPPO GUANGDONG MOBILE TELECOMMUNICATIONS CO., LTD.) 13 September 2019 (2019-09-13) description, paragraphs [0033]-[0060] and [0136]-[0140] | 1, 3-14, 16-29 |
| Y | CN 110233970 A (OPPO GUANGDONG MOBILE TELECOMMUNICATIONS CO., LTD.) 13 September 2019 (2019-09-13) description, paragraphs [0033]-[0060] and [0136]-[0140] | 2, 15 |
| Y | CN 109688293 A (NUBIA TECHNOLOGY CO., LTD.) 26 April 2019 (2019-04-26) description, paragraphs [0073]-[0124] | 2, 15 |
| A | US 2018270424 A1 (MOTOROLA MOBILITY LLC) 20 September 2018 (2018-09-20) entire document | 1-29 |
| A | US 2009129674 A1 (LIN YIJUN et al.) 21 May 2009 (2009-05-21) entire document | 1-29 |
| A | GB 201314077 D0 (STMICROELECTRONICS (RESEARCH & DEVELOPMENT) LIMITED) 18 September 2013 (2013-09-18) entire document | 1-29 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 June 2022** | **30 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/085763**

| Patent document cited in search report | | | Publication date (day/month/year) | Patent family member(s) | | | Publication date (day/month/year) |
|---|---|---|---|---|---|---|---|
| CN | 110233970 | A | 13 September 2019 | None | | | |
| CN | 109688293 | A | 26 April 2019 | None | | | |
| US | 2018270424 | A1 | 20 September 2018 | None | | | |
| US | 2009129674 | A1 | 21 May 2009 | US | 8306360 | B2 | 06 November 2012 |
| GB | 201314077 | D0 | 18 September 2013 | GB | 2516918 | A | 11 February 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110402621